# EUROPEAN PATENT SPECIFICATION

(11) **EP 4 086 788 B1**
(45) Date of publication and mention of the grant of the patent: **27.09.2023**
(21) Application number: 21805343.7
(22) Date of filing: 16.03.2021
(51) Int. Cl.: G06F 16/906, G06F 16/27, G06F 21/64, G06Q 10/00, G06F 21/62

(54) **BLOCKCHAIN-BASED DATA PROCESSING METHOD AND APPARATUS, DEVICE, AND READABLE STORAGE MEDIUM**
BLOCKCHAIN-BASIERTES DATENVERARBEITUNGSVERFAHREN UND -GERÄT SOWIE VORRICHTUNG UND LESBARES SPEICHERMEDIUM
PROCÉDÉ ET APPAREIL DE TRAITEMENT DE DONNÉES BASÉ SUR UNE CHAÎNE DE BLOCS, DISPOSITIF ET SUPPORT DE STOCKAGE LISIBLE

(30) Priority: 12.03.2021 CN 202110272084
(43) Date of publication of application: 09.11.2022
(73) Proprietor: ICALC HOLDINGS LIMITED, Hong Kong 999077 (HK)
(72) Inventor: POON, Ho Man, Hong Kong 999077 (HK)
(74) Representative: Ipside
(86) International application number: PCT/CN2021/081102
(87) International publication number: WO 2022/188196

(56) References cited:
- WO-A2-2020/092900
- CN-A- 111 222 841
- CN-A- 111 724 264
- CN-A- 111 724 264
- CN-A- 112 036 730
- KR-B1- 102 172 903
- US-A1- 2020 184 041
- ALESHI AHRASH ET AL: "Blockchain Model for Enhancing Aircraft Maintenance Records Security", 2019 IEEE INTERNATIONAL SYMPOSIUM ON TECHNOLOGIES FOR HOMELAND SECURITY (HST), IEEE, 5 November 2019 (2019-11-05), pages 1-7, XP033737688, DOI: 10.1109/HST47167.2019.9032943 [retrieved on 2020-03-11]

## Description

### TECHNICAL FIELD

This disclosure relates to the field of computer technology, and more particularly, to a block chain-based data processing method and apparatus, a device, and a readable storage medium.

### BACKGROUND

A block chain is a new application model of computer technologies such as distributed data storages, peer-to-peer transmissions, consensus mechanisms, and cryptographic algorithms. The block chain is mainly used to organize data in chronological order and encrypt the data into an account book, thereby making the data non-tamperable and unforgeable, and can verify, store, and update data. The block chain is applicable in wider fields because of the non-tamperable and unforgeable characteristics.

At present, a process of storing data into the block chain mainly includes the following. Transaction data is uploaded by a client to a data node or light node in the block chain, and the transaction data is transmitted by the data node or light node to a consensus node in the form of baton. A block can be generated and added into the block chain, after the consensus node passes a consensus on the transaction data.

However, the way to generate the block by packing all transaction data is inconvenient for subsequent data reading. When a part of the transaction data may be read by a user, a block chain node needs to traverse all the transaction data to query the part of the transaction data required by the user, which may consume a lot of time and lead to a poor data reading rate.

KR102172903B 1 discloses a database management system based on blockchain technology which guarantees the integrity of data by applying a blockchain technique for distributed storage, not simply recording the data in a table. According to an embodiment of the present invention, a first blockchain in which transaction records are stored and a second blockchain in which the original data is stored exist separately, but are operated together at the same time.

CN111724264A discloses a financial asset trusteeship system based on a blockchain, which comprises blockchain underlying data and an asset trusteeship system, and the asset trusteeship system runs on the blockchain underlying data. The trusteeship system runs in underlying data of a blockchain network. According to the decentralized asset trusteeship of the blockchain, an asset trusteeship mode independent of a single institution or individual is constructed, assets are classified, the assets of the user can be changed at any time according to different asset types and different trusteeship parties.

WO2020092900A2 discloses systems, methods, platforms, and devices that generate, store, transact, transfer, exchange, and/or otherwise process digital tokens. In embodiments, systems, methods, platforms, and devices obtain an identifier for an item that includes a set of item attributes, generate a digital token including a set of digital attributes that correspond to the set of item attributes, and cryptographically link the digital token to one or more units of the item. The digital token may be transferred, exchanged, redeemed, or otherwise transacted.

ALESHI AHRASH ET AL: "Blockchain Model for Enhancing Aircraft Maintenance Records Security", 2019 IEEE INTERNATIONAL SYMPOSIUM ON TECHNOLOGIES FOR HOMELAND SECURITY (HST), IEEE, 5 November 2019 (2019-11-05), pages 1-7, XP033737688, DOI: 10.1109/ HST47167.2019.9032943 illustrates use of block chains for aircraft maintenance.

### SUMMARY

Aspects of the invention are set out in the appended claims. Implementations of the disclosure provide a block chain-based data processing method and apparatus, a device, and a readable storage medium, which can classify and store data in a block chain, thereby improving a data reading rate.

A block chain-based data processing method is provided in an aspect of implementations of the disclosure. The method includes the following. Virtual asset associated data of an item transmitted by a first device is obtained, where the item includes at least two components. A smart contract is triggered based on the virtual asset associated data of the item, and a block generation rule is obtained through the smart contract, where the block generation rule includes a service type of data used for block generation. The virtual asset associated data of the item is classified according to the smart contract and the service type in the block generation rule, to obtain N types of classified data, where each of the N types of classified data corresponds to one service type, and N is a positive integer. For each of the N types of classified data, virtual asset associated data belonging to a first target component is obtained, and component asset data of the first target component is determined according to the virtual asset associated data belonging to the first target component, where the at least two components include the first target component. A block used to record the first target component is generated according to the component asset data of the first target component, and the block is added into a block chain to which the smart contract belongs. A block chain-based data processing apparatus is provided in an aspect of implementations of the disclosure. The apparatus includes a data obtaining module, a contract invoking module, a data classifying module, and a block adding module. The data obtaining module is configured to obtain virtual asset associated data of an item transmitted by a first device, where the item includes at least two components. The contract invoking module is configured to trigger a smart contract based on the virtual asset associated data of the item and obtain a block generation rule through the smart contract, where the block generation rule includes a service type of data used for block generation. The data classifying module is configured to classify the virtual asset associated data of the item according to the smart contract and the service type in the block generation rule to obtain N types of classified data, where each of the N types of classified data corresponds to one service type, and N is a positive integer. For each of the N types of classified data, the data classifying module is further configured to obtain virtual asset associated data belonging to a first target component, and determine component asset data of the first target component according to the virtual asset associated data belonging to the first target component, where the at least two components include the first target component. The block adding module is configured to generate, according to the component asset data of the first target component, a block used to record the first target component, and add the block into a block chain to which the smart contract belongs.

In an implementation, the service type includes an asset service data type, a basic service data type, and a transaction service data type. The data classifying module is further configured to obtain a data key field corresponding to the asset service data type, where the data key field includes a use record key field, a maintenance record key field, and a depreciation record key field. The data classifying module is further configured to obtain, in the virtual asset associated data of the item, a previous use record corresponding to the use record key field, a previous maintenance record corresponding to the maintenance record key field, and a previous depreciation record corresponding to the depreciation record key field, and determine the previous use record, the previous maintenance record, and the previous depreciation record as first classified data corresponding to the asset service data type. The data classifying module is further configured to obtain a factory key field corresponding to the basic service data type, obtain factory associated data corresponding to the factory key field in the virtual asset associated data of the item, and determine the factory associated data as second classified data corresponding to the basic service data type. The data classifying module is further configured to obtain a transaction key field corresponding to the transaction service data type, obtain transaction associated data corresponding to the transaction key field in the virtual asset associated data of the item, and determine the transaction associated data as third classified data corresponding to the transaction service data type. The data classifying module is further configured to combine the first classified data, the second classified data, and the third classified data into the N types of classified data.

In an implementation, the data classifying module is further configured to obtain a component identification of the first target component. The data classifying module is further configured to obtain, in the first classified data, virtual asset associated data with the component identification of the first target component as first component data. The data classifying module is further configured to obtain, in the second classified data, virtual asset associated data with the component identification of the first target component as second component data. The data classifying module is further configured to obtain, in the third classified data, virtual asset associated data with the component identification of the first target component as third component data. The data classifying module is further configured to combine the first component data, the second component data, and the third component data into the component asset data of the first target component.

In an implementation, the block includes a first block, a second block, and a third block. The block adding module is further configured to generate the first block according to the component identification of the first target component and the first component data. The block adding module is further configured to generate the second block according to the component identification of the first target component and the second component data. The block adding module is further configured to generate the third block according to the component identification of the first target component and the third component data. The block adding module is further configured to add the first block, the second block, and the third block respectively into the block chain.

In an implementation, the apparatus further includes a device data obtaining module and a data update module. The device data obtaining module is configured to obtain device associated data transmitted by a second device in a heartbeat cycle, where the device associated data is use data of the second device after a second target component is installed, and the at least two components include the second target component. The data update module is configured to traverse the device associated data. The data update module is further configured to obtain a target service type corresponding to component associated data of the second target component, when the device associated data includes the component associated data of the second target component. The data update module is further configured to obtain a component identification of the second target component and obtain a first associated block in the block chain, where the first associated block includes the component identification of the second target component and belongs to the target service type. The data update module is further configured to generate a target block according to the first associated block and the component associated data, and add the target block into the block chain.

In an implementation, the target service type includes the asset service data type. The data update module is further configured to obtain a component previous use record, a component previous maintenance record, and a component previous depreciation record of the second target component stored in the first associated block. The data update module is further configured to obtain, in the component associated data, a component use record, a component maintenance record, and a component depreciation record belonging to the asset service data type. The data update module is further configured to determine the component previous use record, the component previous maintenance record, the component previous depreciation record, the component use record, the component maintenance record, and the component depreciation record as component asset data of the second target component. The data update module is further configured to generate the target block according to the component identification of the second target component and the component asset data of the second target component.

In an implementation, the apparatus further includes a request processing module, a data matching module, and a data processing module. The request processing module is configured to obtain a data update request for a third target component transmitted by a third device, where the at least two components include the third target component, and the data update request includes component update data of the third target component. The request processing module is further configured to obtain a second associated block in the block chain based on the data update request, where the second associated block is used to record the third target component. The data matching module is configured to obtain virtual asset associated data belonging to the third target component stored in the second associated block, and compare the virtual asset associated data belonging to the third target component with the component update data. The data processing module is configured to generate, according to the virtual asset associated data belonging to the third target component and the component update data, a component block used to record the third target component when the component update data does not exist in the virtual asset associated data belonging to the third target component, and add the component block into the block chain. The data processing module is further configured to generate a data duplicate notification when the component update data exists in the virtual asset associated data belonging to the third target component, and transmit the data duplicate notification to the third device.

In an implementation, the apparatus further includes a request obtaining module, a block obtaining module, and a data transmitting module. The request obtaining module is configured to obtain a data access request for a fourth target component transmitted by a fourth device, where the at least two components include the fourth target component. The block obtaining module is configured to obtain a third associated block in the block chain based on the data access request, where the third associated block is used to record the fourth target component. The data transmitting module is configured to obtain virtual asset associated data belonging to the fourth target component stored in the third associated block, and transmit the virtual asset associated data belonging to the fourth target component to the fourth device.

In an implementation, the apparatus further includes a data evaluating module and a reference value transmitting module. The data evaluating module is configured to obtain a real right transfer request for the item transmitted by a fifth device, where the real right transfer request is used to transfer an affiliate authority of the item to a sixth device, the fifth device has a use authority of the item after the affiliate authority is transferred, and the real right transfer request includes an applied virtual asset value. The data evaluating module is further configured to trigger the smart contract based on the real right transfer request and obtain an item associated block associated with the item in the block chain through the smart contract, where the item associated block includes component asset data respectively corresponding to the at least two components. The data evaluating module is further configured to generate a virtual asset evaluation reference value for the item according to the smart contract and the component asset data respectively corresponding to the at least two components, where the virtual asset evaluation reference value is used to evaluate a virtual asset value of the item for reference. The reference value transmitting module is configured to transmit the virtual asset evaluation reference value to the sixth device, for the sixth device to determine a virtual asset value matched with the virtual asset evaluation reference value, and when the virtual asset value is greater than or equal to the applied virtual asset value, transfer virtual asset data corresponding to the applied virtual asset value to a device account corresponding to the fifth device.

In an implementation, the block generation rule further includes an integration type. The apparatus further includes an identification obtaining module and a block generating module. The identification obtaining module is configured to obtain an item identification of the item according to the smart contract and the integration type in the block generation rule. The block generating module is configured to generate, according to the item identification and the virtual asset associated data of the item, an item block used to record the item, and add the item block into the block chain.

A computer device is provided in an aspect of implementations of the disclosure. The computer device includes a processor and a memory. The memory is configured to store computer programs. The computer programs, when executed by the processor, cause the processor to perform the method in implementations of the disclosure.

A computer-readable storage medium is provided in an aspect of implementations of the disclosure. The computer-readable storage medium is configured to store computer programs, and the computer programs include program instructions which, when executed by a processor, are operable with the processor to perform the method in implementations of the disclosure.

A computer program product or computer programs are provided in an aspect of the disclosure. The computer program product or computer programs include computer instructions which are stored in a computer-readable storage medium. A processor of a computer device is configured to read the computer instructions from the computer-readable storage medium. The computer instructions, when executed by the processor, cause the processor to perform the method described in an aspect of implementations of the disclosure.

In implementations of the disclosure, when the virtual asset associated data of the item (equivalent to the transaction data obtained at a block chain node) is stored into the block chain, the virtual asset associated data of the item can be classified according to the service types in the block generation rule, to obtain multiple types of classified data. One type of classified data corresponds to one service type. Then virtual asset associated data corresponding to each component (e.g., the first target component) is obtained in each type of classified data. That is, the virtual asset associated data of each component in each service type can be obtained through classification. Component asset data of each component can be determined according to the virtual asset associated data of one component in multiple service types, and the block is generated based on the component asset data and added into the block chain. That is, a block corresponding to each component stores virtual asset associated data of the component in multiple service types. Therefore, during subsequent reading of data of a target component of the item in a certain designated service type, there is no need to traverse complete virtual asset associated data of the whole item, and only data belonging to the designated service type in the block corresponding to the target component is queried and traversed. As such, query time for data can be saved, thereby improving the data reading rate. To sum up, in the disclosure, data can be classified and then stored in the block chain, thereby improving the data reading rate.

### BRIEF DESCRIPTION OF THE DRAWINGS

FIG. 1 is a schematic diagram illustrating a network architecture provided in implementations of the disclosure.
FIG. 2a and FIG. 2b are schematic diagrams illustrating classifying and adding of data provided in implementations of the disclosure.
FIG. 2c is a schematic diagram illustrating data adding provided in implementations of the disclosure.
FIG. 3 is a schematic flowchart illustrating a block chain-based data processing method provided in implementations of the disclosure.
FIG. 4 is a schematic structural diagram illustrating a block chain-based data processing apparatus provided in implementations of the disclosure.
FIG. 5 is a schematic structural diagram illustrating a computer device provided in implementations of the disclosure.

### DETAILED DESCRIPTION

Technical solution in implementations of the present disclosure will be described clearly and completely with reference to accompanying drawings in implementations of the present disclosure. It can be understood that, implementations described herein are merely some implementations, rather than all implementations, of the present disclosure. All other implementations obtained by those of ordinary skill in the art based on the implementations described herein without creative effort shall fall within the protection scope of the disclosure.

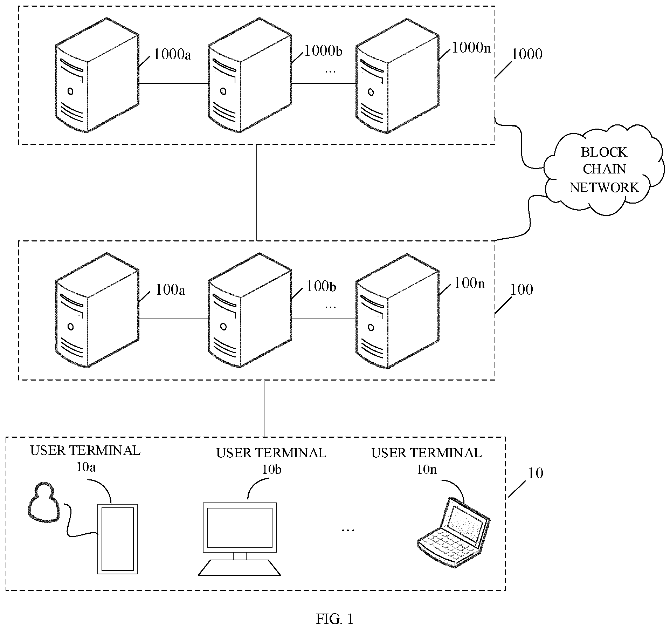

Referring to FIG. 1, FIG. 1 is a schematic diagram illustrating a network architecture provided in implementations of the disclosure. A block chain is a new application model of computer technologies such as distributed data storages, peer-to-peer transmissions, consensus mechanisms, and cryptographic algorithms. The block chain is mainly used to organize data in chronological order and encrypt the data into an account book, thereby making the data non-tamperable and unforgeable, and can verify, store, and update data. The block chain is essentially a decentralized database. Each node in the database stores a same block chain. A block chain network categorizes nodes into a core node, a data node, and a light node. The core node is responsible for a consensus of the whole block chain network, that is, the core node is a consensus node in the block chain network. A process of writing transaction data in the block chain network into the account book may include the following. The transaction data is transmitted by a client to the data node or light node, and then the transaction data is transmitted by the data node and the light node in the block chain network in the form of baton. Until the transaction data is received by the consensus node, the consensus node packs the transaction data into a block, makes a consensus with other consensus nodes, and writes the block carrying the transaction data into the account book after the consensus is passed.

As illustrated in FIG. 1, the network architecture may include a core node (consensus node) cluster 1000, a data node cluster or light node cluster 100, and a user terminal (client) cluster 10. As illustrated in FIG. 1, the core node cluster 1000 may include a core node 1000a, a core node 1000b, ..., and a core node 1000n. Specifically, the data node cluster 100 may include a data node 100a, a data node 100b, ..., and a data node 100n. Specifically, the user terminal cluster 10 may include a user terminal 10a, a user terminal 10b, ..., and a user terminal 10n.

As illustrated in FIG. 1, the user terminal 10a, the user terminal 10b, ..., and the user terminal 10n can respectively perform network connection with the data node 100a, the data node 100b, ..., and the data node 100n, such that the user terminal can perform data interaction with the data node via the network connection. The data node 100a, the data node 100b, ..., and the data node 100n can respectively perform network connection with the core node 1000a, the core node 1000b, ..., and the core node 1000n, such that the data node can perform data interaction with the core node via the network connection. The data node 100a, the data node 100b, ..., and the data node 100n are connected with each other, such that the data nodes can interact with each other. The core node 1000a, the core node 1000b, ..., and the core node 1000n are connected with each other, such that the core nodes can interact with each other.

Take the user terminal 10a, the data node 100a, and the core node 1000a as an example. The data node 100a can receive transaction data transmitted by the user terminal 10a and transmit the transaction data to the core node 1000a via the data node cluster 100. The core node 1000a can store the transaction data into a memory pool (e.g., a transaction pool) and update a hash tree used to record input data. Then the core node 1000a can update a timestamp to a time when the transaction data is received, and try different random values to calculate feature values. When the feature values are obtained, the transaction data can be correspondingly stored, and block headers and block bodies can be generated, thereby obtaining newly generated blocks. The core node 1000a can respectively transmit the newly generated blocks to other core nodes in block chain network where the core node 1000a is located according to node identifications of the other core nodes (i.e., consensus nodes) in the block chain network. The other core nodes can perform verification (i.e., perform a consensus) on the newly generated blocks and add the newly generated blocks into account books to which the other core nodes belong after the verification is completed. Each core node in the block chain network has a corresponding node identification, and can store the node identifications of the other core nodes in the block chain network. As such, according to the node identifications of the other core nodes, the newly generated blocks can be broadcasted to the other core nodes in the block chain network, and the other core nodes can perform the consensus on the newly generated blocks and add the newly generated blocks into account books to which the other core nodes belong after the consensus is passed, such that transaction data stored on all core nodes in the block chain network is consistent.

As for the process that the core node in the block chain network receives the transaction data, generates the transaction data into a block, and adds the block into a block chain to which the core node belongs, i.e., a process that the core node accounts for the block, a block generation rule is newly provided in the disclosure. The block generation rule includes a service type of data used for block generation. After the transaction data is received, the transaction data can be classified according to the service type in the block generation rule and then respectively generated into blocks, and the blocks can be added into the block chain. The following will take the user terminal 10a, the data node 100a, and the core node 1000a as an example to describe a method provided in the disclosure. The user terminal 10a can transmit virtual asset associated data of an item (equivalent to the transaction data) to the data node 100a. The data node 100a can transmit the virtual asset associated data of the item to the core node 1000a. Furthermore, the core node 1000a can trigger a smart contract in the block chain based on the virtual asset associated data of the item, and obtain a block generation rule (the block generation rule includes a service type of data used for block generation) through the smart contract. The core node 1000a can classify the virtual asset associated data of the item according to the smart contract and the service type in the block generation rule, to obtain N types of classified data. Furthermore, virtual asset associated data belonging to each component (the component may be a component of the item, e.g., a first target component) can be obtained in each of the N types of classified data in the block chain. From this, M (M is the number of components of the item and is a positive integer) types of sub-classified data can be obtained according to the classified data in each service type, and each of the M types of sub-classified data in each service type corresponds to a component. That is, virtual asset associated data in N service types can be obtained for each component of the item after the virtual asset associated data of the item is classified according to service types and components. The virtual asset associated data of each component in the N service types can be combined, to obtain component asset data of each component. The component asset data of each component can be generated into a block, and the block can be added into the block chain.

It can be understood that, in the disclosure, the virtual asset associated data of the item can be classified into the component asset data of each component (the component asset data of each component includes N service types) after the virtual asset associated data of the item is classified. During subsequent reading of data of a target component of the item, there is no need to traverse virtual asset associated data of the whole item stored in the block chain, and only a block corresponding to the target component is traversed. As such, query time for data can be saved, thereby improving the data reading rate.

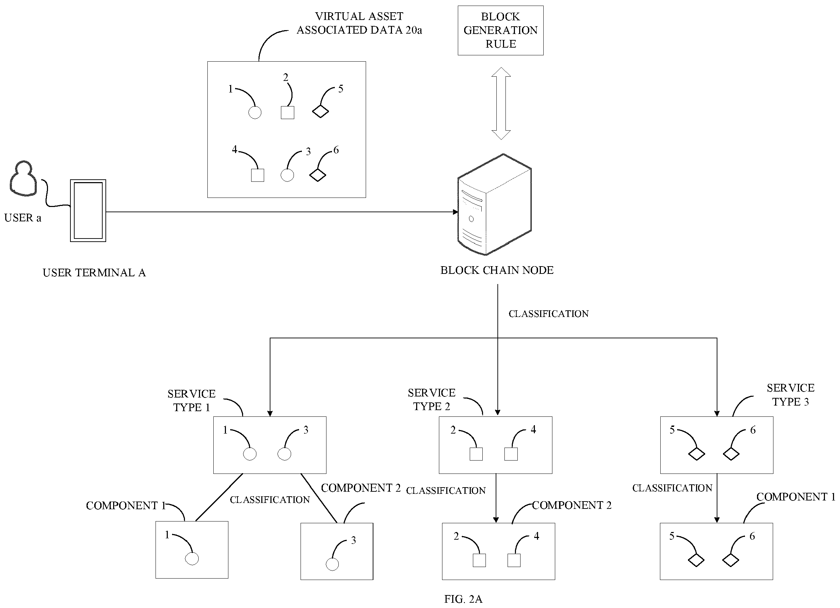

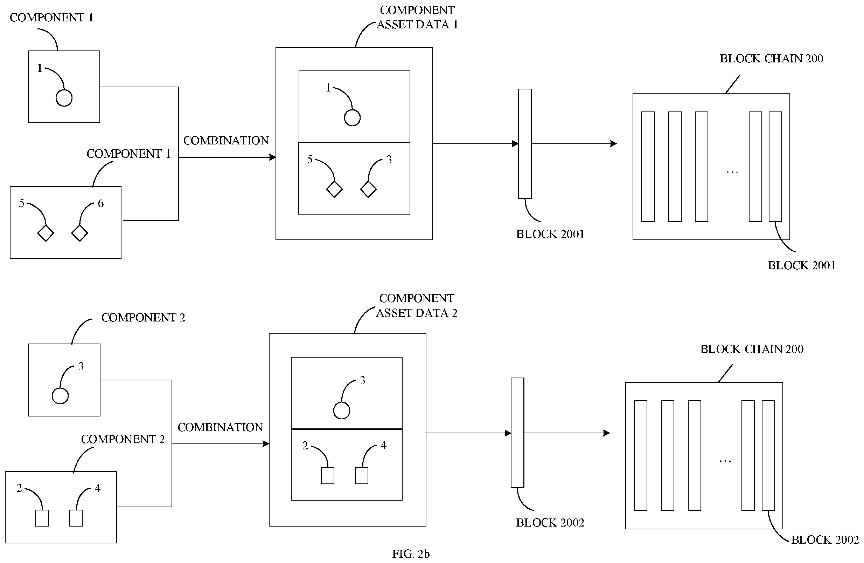

For ease of understanding, referring to FIG. 2a and FIG. 2b, FIG. 2a and FIG. 2b are schematic diagrams illustrating classifying and adding of data provided in implementations of the disclosure. As illustrated in FIG. 2a and FIG. 2b, user terminal A may be any user terminal of the user terminal cluster 10 in the implementation corresponding to FIG. 1. For example, the user terminal may be the user terminal 10a. As illustrated in FIG. 2a and FIG. 2b, a block chain node may be any core node of the core node cluster 1000 in the implementation corresponding to FIG. 1. For example, the core node may be the core node 1000b.

As illustrated in FIG. 2a, virtual asset associated data 20a of an item (consisting of a component 1 and a component 2) can be transmitted by user a to the block chain node via user terminal A. The virtual asset associated data 20a of the item may include virtual asset associated data 1, virtual asset associated data 2, virtual asset associated data 3, virtual asset associated data 4, virtual asset associated data 5, and virtual asset associated data 6. The block chain node can obtain a block generation rule after the virtual asset associated data 20a of the item is received. The block generation rule includes a service type (including a service type 1, a service type 2, and a service type 3) of data used for block generation. Furthermore, the virtual asset associated data 20a of the item can be classified according to the service type in the block generation rule. As illustrated in FIG. 2a, in the virtual asset associated data 20a of the item (including the virtual asset associated data 1, the virtual asset associated data 2, the virtual asset associated data 3, the virtual asset associated data 4, the virtual asset associated data 5, and the virtual asset associated data 6), virtual asset associated data belonging to the service type 1 (including the virtual asset associated data 1 and the virtual asset associated data 3) can be obtained, virtual asset associated data belonging to the service type 2 (including the virtual asset associated data 2 and the virtual asset associated data 4) can be obtained, and virtual asset associated data belonging to the service type 3 (including the virtual asset associated data 5 and the virtual asset associated data 6) can be obtained.

As illustrated in FIG. 2a, virtual asset associated data in one service type can be served as one type of classified data. The virtual asset associated data of the item can be classified into three types of classified data according to the service type 1, the service type 2, and the service type 3. The three types of classified data can include classified data in the service type 1 (including the virtual asset associated data 1 and the virtual asset associated data 3), classified data in the service type 2 (including the virtual asset associated data 2 and the virtual asset associated data 4), and classified data in the service type 3 (including the virtual asset associated data 5 and the virtual asset associated data 6). Furthermore, each type of classified data can be classified according to components of the item (consisting of the component 1 and the component 2). For example, for the classified data in the service type 1, since the virtual asset associated data 1 is virtual asset associated data of the component 1 and the virtual asset associated data 3 is virtual asset associated data of the component 2, the classified data in the service type 1 can be further classified into two types of data (one type of data is the virtual asset associated data 1 belonging to the component 1 and the other type of data is the virtual asset associated data 3 belonging to the component 2). In the same way, for the classified data in the service type 2, since the virtual asset associated data 2 and the virtual asset associated data 4 both are the virtual asset associated data of the component 2, the classified data in the service type 2 can be further classified into one type of data (the virtual asset associated data 2 and the virtual asset associated data 4 belonging to the component 2). In the same way, for the classified data in the service type 3, since the virtual asset associated data 5 and the virtual asset associated data 6 both are the virtual asset associated data of the component 1, the classified data in the service type 3 can be further classified into one type of data (the virtual asset associated data 5 and the virtual asset associated data 6 belonging to the component 1).

Furthermore, as illustrated in FIG. 2b, the virtual asset associated data 1 in the service type 1 as well as the virtual asset associated data 5 and the virtual asset associated data 6 in the service type 3 can be determined as component asset data (component asset data 1 as illustrated in FIG. 2b) of the component 1. A block 2001 can be generated according to the component asset data 1, and added into a block chain 200 after a consensus on the block 2001 is passed. In the same way, the virtual asset associated data 3 in the service type 1 as well as the virtual asset associated data 2 and the virtual asset associated data 4 in the service type 2 can be determined as component asset data (component asset data 2 as illustrated in FIG. 2b) of the component 2. A block 2002 can be generated according to the component asset data 2, and added into the block chain 200 after a consensus on the block 2002 is passed.

It can be understood that, the virtual asset associated data of the item is classified and stored according to service types of data and components, making storage of the virtual asset associated data of the item more refined. One component corresponds to one block, and one block includes virtual asset associated data in multiple service types. During reading of data of a certain component in a certain service type, to obtain virtual asset associated data of the component in the service type, the block chain node does not need to traverse complete virtual asset associated data of the item and only needs to traverse a block corresponding to the component. As such, query time for data can be saved, thereby improving the data reading rate. For example, the component asset data 1 of the component 1 stored in the block 2001 includes the virtual asset associated data 1 in the service type 1 as well as the virtual asset associated data 5 and the virtual asset associated data 6 in the service type 3. During reading of data of the component 1, the block chain node does not need to traverse the virtual asset associated data of the whole item and only needs to obtain data in the block 2001. For example, when the block chain node receives a data access request for the component 1 in the service type 1, the block chain node does not need to traverse the complete virtual asset associated data of the item and only needs to traverse the data in the block 2001, to obtain the virtual asset associated data 1 of the component 1 in the service type 1.

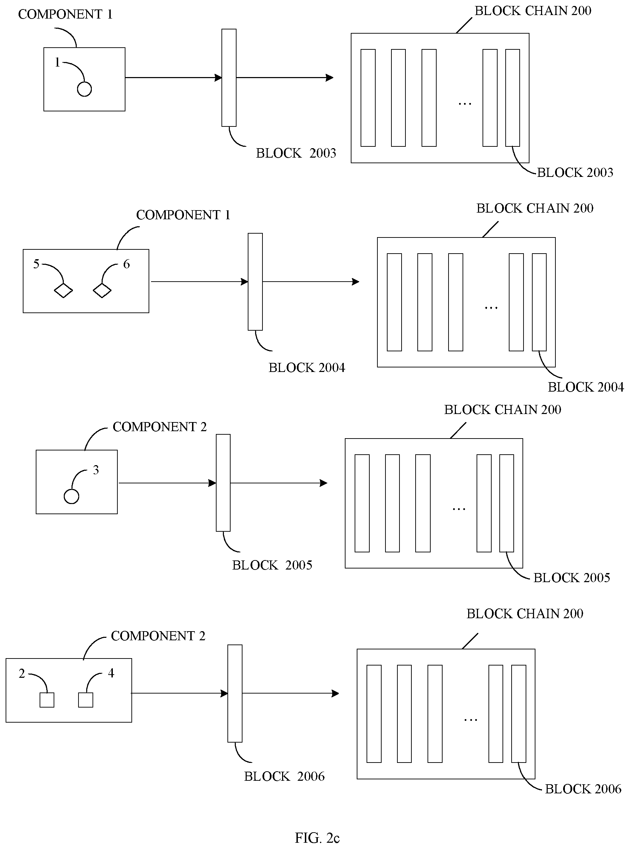

Optionally, it can be understood that, after each type of classified data (corresponding to one service type) is classified according to the components of the item, virtual asset associated data of each component in each service type can be respectively generated into blocks, and the blocks can be respectively added into the block chain. For ease of understanding, referring to FIG. 2c, FIG. 2c is a schematic diagram illustrating data adding provided in implementations of the disclosure. As illustrated in FIG. 2c, in FIG. 2a, the virtual asset associated data in the service type 1 is classified according to the components, to obtain the virtual asset associated data 1 of the component 1 in the service type 1 and the virtual asset associated data 3 of the component 2 in the service type 1. As illustrated in FIG. 2c, the virtual asset associated data 1 in the service type 1 can be served as component asset data of the component 1. A block 2003 can be generated according to the virtual asset associated data 1 of the component 1 in the service type 1 and then added into the block chain 200. The virtual asset associated data 3 of the component 2 in the service type 1 can be served as component asset data of the component 2. A block 2005 can be generated according to the virtual asset associated data 3 of the component 2 in the service type 1 and then added into the block chain 200. In the same way, in FIG. 2a, the virtual asset associated data in the service type 2 is classified according to the components, to obtain the virtual asset associated data 2 and the virtual asset associated data 4 of the component 2 in the service type 2. As illustrated in FIG. 2c, a block 2006 can be generated according to the virtual asset associated data 2 and the virtual asset associated data 4 of the component 2 in the service type 2 and then added into the block chain 200. In the same way, the virtual asset associated data in the service type 3 is classified according to the components, to obtain the virtual asset associated data 5 and the virtual asset associated data 6 of the component 1 in the service type 3. As illustrated in FIG. 2c, a block 2004 can be generated according to the virtual asset associated data 5 and the virtual asset associated data 6 of the component 1 in the service type 3 and then added into the block chain 200.

It can be understood that, virtual asset associated data of each component in each service type is respectively added into the block chain, such that one block corresponds to one component and one service type. During reading of data of a certain component of the item in a certain service type, the block chain node only needs to query a block corresponding to both the component and the service type, to obtain data required, and does not need to traverse the complete virtual asset associated data of the item and virtual asset associated data of the component in all service types. As such, time for data query can be consumed, thereby improving the data reading rate.

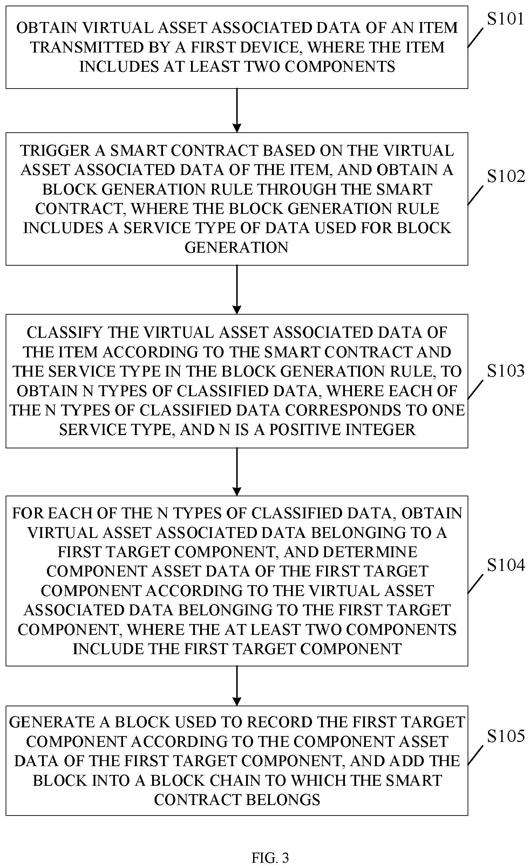

Furthermore, referring to FIG. 3, FIG. 3 is a schematic flowchart illustrating a block chain-based data processing method provided in implementations of the disclosure. The method may be performed by a block chain node (e.g., the core node in the implementation corresponding to FIG. 1) or performed by both the block chain node and a user terminal (e.g., the user terminal in the implementation corresponding to FIG. 1). For example, the method is performed by the block chain node as follows. The block chain-based data processing method may include at least the following operations at S 101 to S105.

At S101, virtual asset associated data of an item transmitted by a first device is obtained, where the item includes at least two components.

In the disclosure, the virtual asset associated data of the item may include use data, accident proof data, asset depreciation data, previous maintenance data, property right certificate data, transaction data (e.g., lease associated data), etc. of the item. The item includes at least two components. The virtual asset associated data of the item may include use data, accident proof data, asset depreciation data, previous maintenance data, property right certificate data, transaction data, etc. of each component. In the disclosure, the item may be a transportation device (e.g., an airplane, a ship, a vehicle, etc.), and also be a related component of the transportation device. For example, when the transportation device is an airplane, a related component of the airplane may include an engine, a fuselage, a landing gear, and so on, and the related component such as an engine, a fuselage, or a landing gear can be served as the item in the disclosure. Take an engine as an example of the item. The virtual asset associated data of the item may include use data, accident proof data, asset depreciation data, previous maintenance data, property right certificate data, and transaction data, which are data of a component of the engine. For example, the use data of the component of the engine includes voyage related data when the component is installed in the engine and the engine is installed in the airplane, such as a voyage duration, a voyage area, etc. The accident proof data of the component of the engine includes proof data that the component has suffered from fire, water ingress, falling, and other accidents. The asset depreciation data of the component of the engine includes different voyage discount rates of voyage areas when the component is installed in the engine and the engine is installed in the airplane, where different voyage areas have different voyage discount rates because the worse the environment is, the more the engine performance will be affected. The previous maintenance data of the component of the engine includes maintenance time of the component, a maintenance place of the component, a recovery performance ratio after maintenance of the component, and other data. The property right certificate data of the component of the engine includes a factory license certificate, a production license certificate, a manufacturer, a quasi-flight proof of the component, and so on. The transaction data of the component of the engine includes lease associated data of the component such as lease time of the component, a lease amount, and a return status of the component after lease, buy and sell associated data of the component such as a buy and sell amount of the component, buy and sell time of the component, and so on, and refit associated data of the component such as a refit amount of the component, refit time of the component, and so on. Virtual asset associated data of the component of the engine (including use data, accident proof data, asset depreciation data, previous maintenance data, property right certificate data, transaction data, and so on) together constitutes virtual asset associated data of the engine.

It can be understood that, the virtual asset associated data of the item can be transmitted by the first device to the block chain node.

At S 102, a smart contract is triggered based on the virtual asset associated data of the item, and a block generation rule is obtained through the smart contract, where the block generation rule includes a service type of data used for block generation.

In the disclosure, the service type of data used for block generation included in the block generation rule can be defined subjectively. For example, the service type may include an asset service data type, a basic service data type, and a transaction service data type. Data corresponding to the asset service data type may be data used to record item loss, such as the use data of component, the accident proof data of the component, the asset depreciation data of the component, the previous maintenance data of the component of the item above, and so on. Data corresponding to the basic service data type may be property right certificate data of the item, such as the property right certificate data of the item above (e.g., a factory license certificate of the component, a quasi-flight proof of the component, and so on). Data corresponding to the transaction service data type may be transaction associated data of the item (e.g., lease associated data of the item, buy and sell associated data of the item, refit associated data of the item, lease associated data of the component of the item, buy and sell associated data of the component of the item, refit associated data of the component of the item, and so on).

At S 103, the virtual asset associated data of the item is classified according to the smart contract and the service type in the block generation rule, to obtain N types of classified data, where each of the N types of classified data corresponds to one service type, and N is a positive integer.

In the disclosure, the virtual asset associated data of the item can be classified according to the service type in the block generation rule. For example, in the virtual asset associated data of the item, virtual asset associated data belonging to a same service type is classified into one type. If the service type has N types, the virtual asset associated data of the item can be classified into N types as follows. A data key field corresponding to the asset service data type is obtained, where the data key field includes a use record key field, a maintenance record key field, and a depreciation record key field. A previous use record corresponding to the use record key field, a previous maintenance record corresponding to the maintenance record key field, and a previous depreciation record corresponding to the depreciation record key field are obtained in the virtual asset associated data of the item, and the previous use record, the previous maintenance record, and the previous depreciation record are determined as first classified data corresponding to the asset service data type. A factory key field corresponding to the basic service data type is obtained, factory associated data corresponding to the factory key field is obtained in the virtual asset associated data of the item, and the factory associated data is determined as second classified data corresponding to the basic service data type. A transaction key field corresponding to the transaction service data type is obtained, transaction associated data corresponding to the transaction key field is obtained in the virtual asset associated data of the item, and the transaction associated data is determined as third classified data corresponding to the transaction service data type. The first classified data, the second classified data, and the third classified data are combined into the N types of classified data.

It can be understood that, each service type can respectively correspond to different key fields, and each key field can correspond to one type of data. Data belonging to different service types can be obtained in the virtual asset associated data of the item according to different key fields. For example, the asset service data type can correspond to the use record key field, the maintenance record key field, and the depreciation record key field. The previous use record (such as a previous use record of each component of the item) can be obtained in the virtual asset associated data of the item according to the use record key field. The previous maintenance record (such as a previous maintenance record of each component of the item) can be obtained in the virtual asset associated data of the item according to the maintenance record key field. The previous depreciation record (such as a previous accident record of each component of the item, and other data) can be obtained in the virtual asset associated data of the item according to the depreciation record key field. The previous use record, the previous maintenance record, and the previous depreciation record can be served as data corresponding to an asset service type. If the basic service data type corresponds to the factory key field, the factory associated data (such as a factory license certificate, a production license certificate, and so on) can be obtained in the virtual asset associated data of the item according to the factory key field. If the transaction service data type corresponds to the transaction key field, the transaction associated data (such as a lease amount, a lease duration, a return status after lease, and so on) can be obtained in the virtual asset associated data of the item according to the transaction key field.

At S 104, for each of the N types of classified data, virtual asset associated data belonging to a first target component is obtained, and component asset data of the first target component is determined according to the virtual asset associated data belonging to the first target component, where the at least two components include the first target component.

In the disclosure, after the N types of classified data is obtained by classifying the virtual asset associated data of the item according to the service types above, each of the N types of classified data can be classified according to the components of the item, to obtain virtual asset associated data of each component in each service type. As an example, the component of the item includes the first target component, and the method includes the following. A component identification of the first target component can be obtained. In the first classified data, virtual asset associated data with the component identification of the first target component can be obtained as first component data. In the second classified data, virtual asset associated data with the component identification of the first target component can be obtained as second component data. In the third classified data, virtual asset associated data with the component identification of the first target component can be obtained as third component data. That is, the first component data is virtual asset associated data of the first target component in the asset service data type, the second component data is virtual asset associated data of the first target component in the basic service data type, and the third component data is virtual asset associated data of the first target component in the transaction service data type. Furthermore, the first component data, the second component data, and the third component data can be combined into the component asset data of the first target component.

At S105, a block used to record the first target component is generated according to the component asset data of the first target component, and the block is added into a block chain to which the smart contract belongs.

In the disclosure, the block used to record the first target component can be generated according to the component identification of the first target component and the component asset data, and added into the block chain. It can be understood that, one block corresponds to one component of the item, and data stored in one block includes virtual asset associated data of one component in multiple service types. During acquisition of data of a certain component of the item in a certain service type, the block chain node obtains a block corresponding to the component only via a component identification of the component and obtains virtual asset associated data of the component in a designated service type only by traversing data stored in this block. The block chain node does not need to traverse the complete virtual asset associated data of the item and only needs to traverse a part of virtual asset associated data of the component to obtain data of the component in the designated service type. As such, time for data query can be consumed, thereby improving the data reading rate.

Optionally, it can be understood that, in order to further improve the data reading rate, after the virtual asset associated data of each component in each service type is obtained by classifying each of the N types of classified data according to the components of the item, the virtual asset associated data of each component in each service type can be respectively generated into blocks, and the blocks can be added into the block chain. As an example, the component is the first target component. A first block can be generated according to the component identification of the first target component and the first component data. A second block can be generated according to the component identification of the first target component and the second component data. A third block can be generated according to the component identification of the first target component and the third component data. The first block, the second block, and the third block can be respectively added into the block chain. It can be understood that, data stored in the first block is virtual asset associated data of the first target component in the asset service data type. Data stored in the second block is virtual asset associated data of the first target component in the basic service data type. Data stored in the third block is virtual asset associated data of the first target component in the transaction service data type. During reading of data of a certain component of the item in a certain service type, only via a component identification of the component and the service type, the block chain node obtains a block corresponding to both the component and the service type and obtains data stored in this block. The block chain node does not need to traverse the complete virtual asset associated data of the item and only needs to traverse a block corresponding to the component and a certain service type, to obtain data of the component in a designated service type. As such, time for data query can be consumed, thereby improving the data reading rate.

It can be understood that, when the item or a certain component of the item is installed in a certain device, the device installed with the item or the certain component of the item can regularly transmit device use data to the block chain node. The block chain node can obtain item associated data or component associated data of the item in the device use data and update data of the component of the item stored in the block chain. As an example, the component is a second target component, the second target component of the item is installed in a second device, and the method includes the following. Device associated data transmitted by the second device can be obtained in a heartbeat cycle, where the device associated data is use data of the second device after the second target component is installed. The at least two components include the second target component. The device associated data can be traversed. A target service type corresponding to component associated data of the second target component can be obtained, when the device associated data includes the component associated data of the second target component. A component identification of the second target component can be obtained, and a first associated block can be obtained in the block chain, where the first associated block includes the component identification of the second target component and belongs to the target service type. A target block can be generated according to the first associated block and the component associated data, and the target block can be added into the block chain.

As an example, the target service type above is the asset service data type. The target block is generated according to the first associated block and the component associated data as follows. A component previous use record, a component previous maintenance record, and a component previous depreciation record of the second target component stored in the first associated block can be obtained. A component use record, a component maintenance record, and a component depreciation record belonging to the asset service data type can be obtained in the component associated data. The component previous use record, the component previous maintenance record, the component previous depreciation record, the component use record, the component maintenance record, and the component depreciation record can be determined as component asset data of the second target component. The target block is generated according to the component identification of the second target component and the component asset data of the second target component.

It can be understood that, the device associated data may include the component associated data of the second target component. The component associated data may include component data of multiple service types (e.g., the asset service data type, the basic service data type, and the transaction service data type). The block chain node can obtain the component associated data after the device associated data is received. If block generation is based on a principle that one component corresponds to one block, where the block includes virtual asset associated data of the component in the multiple service types, then the block chain node can obtain a block corresponding to the second target component and obtain the virtual asset associated data of the second target component stored in the block, and the block chain node can generate the target block according to the virtual asset associated data of the second target component and the component associated data and adds the target block into the block chain. If block generation is based on a principle that both one component and one service type correspond to one block, where data stored in the block is virtual asset associated data of the component in one service type, then the block chain node can obtain a block corresponding to both the second target component and each service type and obtain virtual asset associated data of the second target component in the service type stored in the block, and the block chain node can obtain data belonging to the service type in the component associated data and generate the target block according to the virtual asset associated data of the second target component in the service type and the data belonging to the service type in the component associated data. That is, the component associated data can be classified into data of different service types, and data update can be performed on different blocks of the second target component according to the service types.

It can be understood that, after the virtual asset associated data of the item is classified and then stored into the block chain by the block chain node, if the block chain node receives a data update request for a certain component of the item (the request includes component update data of the component), the block chain node can compare the component update data with data of the component stored in the block chain. If the component update data is matched with the data of the component stored in the block chain, the data update is not performed. If the component update data is not matched with the data of the component stored in the block chain, the data update is performed based on the component update data. As an example, the component is a third target component, and the method includes the following. A data update request for a third target component transmitted by a third device can be obtained, where the at least two components include the third target component, and the data update request includes component update data of the third target component. A second associated block can be obtained in the block chain based on the data update request, where the second associated block is used to record the third target component. Virtual asset associated data belonging to the third target component stored in the second associated block can be obtained, and the virtual asset associated data belonging to the third target component can be compared with the component update data. According to the virtual asset associated data belonging to the third target component and the component update data, a component block used to record the third target component can be generated when the component update data does not exist in the virtual asset associated data belonging to the third target component, and the component block can be added into the block chain. A data duplicate notification can be generated when the component update data exists in the virtual asset associated data belonging to the third target component, and the data duplicate notification can be transmitted to the third device.

It can be understood that, after the virtual asset associated data of the item is classified and then stored into the block chain by the block chain node, if the block chain node receives a data access request of a certain device for a certain component of the item, the block chain node can transmit related data of the component to the device based on the data access request. As an example, the device is a fourth device and the component is a fourth target component, and the method includes the following. A data access request for the fourth target component transmitted by the fourth device can be obtained, where the at least two components include the fourth target component. A third associated block can be obtained in the block chain based on the data access request, where the third associated block is used to record the fourth target component. Virtual asset associated data belonging to the fourth target component stored in the third associated block can be obtained, and the virtual asset associated data belonging to the fourth target component can be transmitted to the fourth device.

It can be understood that, after the virtual asset associated data of the item is classified and then stored into the block chain by the block chain node, if the block chain node receives a real right transfer request of a certain device for the item, the block chain node can quickly obtain virtual asset associated data of the item (may include virtual asset associated data of a component of the item) from the block chain, and quickly calculate a virtual asset evaluation reference value of the item according to the virtual asset associated data. A virtual asset value of the item can be quickly and accurately determined by a related device according to the virtual asset evaluation reference value. The real right transfer request can be understood as a transfer request of an affiliate authority of the item. The affiliate authority of the item can be understood as an item mortgage authority. Virtual asset data corresponding to an applied virtual asset value can be obtained from a third-party device by a requesting party via the real right transfer request. For example, the real right transfer request may be a loan request. The loan request can be initiated by an owner of the item to the third-party device. If the third party agrees to provide the virtual asset data to the owner of the item, the third party can possess the item mortgage authority of the item after transferring the virtual asset data corresponding to the applied virtual asset value to the owner of the item. As an example, the owner of the item is a fifth device, the third-party device is a sixth device, and the method includes the following. A real right transfer request for the item transmitted by the fifth device can be obtained, where the real right transfer request is used to transfer the affiliate authority of the item to the sixth device. The fifth device has a use authority of the item after the affiliate authority is transferred, and the real right transfer request includes the applied virtual asset value. The smart contract can be triggered based on the real right transfer request, and an item associated block associated with the item in the block chain can be obtained through the smart contract, where the item associated block includes component asset data respectively corresponding to the at least two components. The virtual asset evaluation reference value for the item can be generated according to the smart contract and the component asset data respectively corresponding to the at least two components. The virtual asset evaluation reference value is used to evaluate a virtual asset value of the item for reference. The virtual asset evaluation reference value can be transmitted to the sixth device, for the sixth device to determine a virtual asset value matched with the virtual asset evaluation reference value. When the virtual asset value is greater than or equal to the applied virtual asset value, virtual asset data corresponding to the applied virtual asset value can be transferred to a device account corresponding to the fifth device. It can be understood that, the block chain node can evaluate the virtual asset value of the item based on the component asset data of the item, to obtain the virtual asset evaluation reference value. The sixth device can determine a final virtual asset value of the item based on the virtual asset evaluation reference value.

Optionally, it can be understood that, the block generation rule further includes an integration type besides the service types above. The block chain node can generate the complete virtual asset associated data of the item into a block according to the integration type and add the block into the block chain, without classifying the virtual asset associated data of the item. The method includes the following. An item identification of the item can be obtained according to the smart contract and the integration type in the block generation rule. An item block used to record the item can be generated according to the item identification and the virtual asset associated data of the item, and the item block can be added into the block chain.

It can be understood that, in the disclosure, the first device, the second device, the third device, ..., the sixth device each are user terminals. The user terminal may be any user terminal of the user terminal cluster in the implementation corresponding to FIG. 1, for example, the user terminal is the user terminal 10a.

In implementations of the disclosure, when the virtual asset associated data of the item (equivalent to the transaction data obtained at a block chain node) is stored into the block chain, the virtual asset associated data of the item can be classified according to the service types in the block generation rule, to obtain multiple types of classified data. One type of classified data corresponds to one service type. Then virtual asset associated data corresponding to each component (e.g., the first target component) is obtained in each type of classified data. That is, the virtual asset associated data of each component in each service type can be obtained through classification. Component asset data of each component can be determined according to the virtual asset associated data of one component in multiple service types, and the block is generated based on the component asset data and added into the block chain. That is, a block corresponding to each component stores virtual asset associated data of the component in multiple service types. Therefore, during subsequent reading of data of a target component of the item in a certain designated service type, there is no need to traverse complete virtual asset associated data of the whole item, and only data belonging to the designated service type in the block corresponding to the target component is queried and traversed. As such, time for data query can be consumed, thereby improving the data reading rate. To sum up, in the disclosure, data can be classified and stored in the block chain, thereby improving the data reading rate.

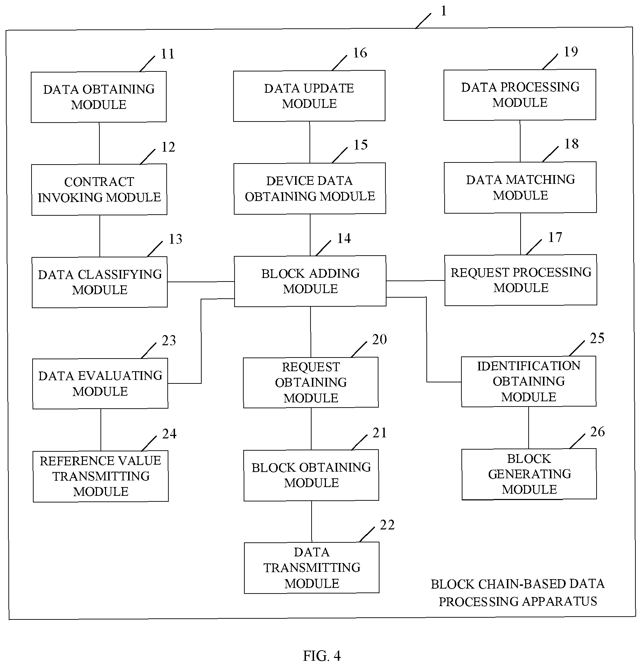

Furthermore, referring to FIG. 4, FIG. 4 is a schematic structural diagram illustrating a block chain-based data processing apparatus provided in implementations of the disclosure. The block chain-based data processing apparatus may be a computer program (including program codes) executed in a computer device, for example, the block chain-based data processing apparatus is an application. The block chain-based data processing apparatus can be configured to perform the method illustrated in FIG. 3. As illustrated in FIG. 4, a block chain-based data processing apparatus 1 may include a data obtaining module 11, a contract invoking module 12, a data classifying module 13, and a block adding module 14. The data obtaining module 11 is configured to obtain virtual asset associated data of an item transmitted by a first device, where the item includes at least two components. The contract invoking module 12 is configured to trigger a smart contract based on the virtual asset associated data of the item and obtain a block generation rule through the smart contract, where the block generation rule includes a service type of data used for block generation. The data classifying module 13 is configured to classify the virtual asset associated data of the item according to the smart contract and the service type in the block generation rule to obtain N types of classified data, where each of the N types of classified data corresponds to one service type, and N is a positive integer. For each of the N types of classified data, the data classifying module 13 is further configured to obtain virtual asset associated data belonging to a first target component, and determine component asset data of the first target component according to the virtual asset associated data belonging to the first target component, where the at least two components include the first target component. The block adding module 14 is configured to generate, according to the component asset data of the first target component, a block used to record the first target component, and add the block into a block chain to which the smart contract belongs.

As for the specific implementation methods for the data obtaining module 11, the contract invoking module 12, the data classifying module 13, and the block adding module 14, reference can be made to the operations at S 101 to S 104 in the implementation corresponding to FIG. 3, which will not be repeated herein.

In an implementation, the service type includes an asset service data type, a basic service data type, and a transaction service data type. The data classifying module 13 is further configured to obtain a data key field corresponding to the asset service data type, where the data key field includes a use record key field, a maintenance record key field, and a depreciation record key field. The data classifying module 13 is further configured to obtain, in the virtual asset associated data of the item, a previous use record corresponding to the use record key field, a previous maintenance record corresponding to the maintenance record key field, and a previous depreciation record corresponding to the depreciation record key field, and determine the previous use record, the previous maintenance record, and the previous depreciation record as first classified data corresponding to the asset service data type. The data classifying module 13 is further configured to obtain a factory key field corresponding to the basic service data type, obtain factory associated data corresponding to the factory key field in the virtual asset associated data of the item, and determine the factory associated data as second classified data corresponding to the basic service data type. The data classifying module 13 is further configured to obtain a transaction key field corresponding to the transaction service data type, obtain transaction associated data corresponding to the transaction key field in the virtual asset associated data of the item, and determine the transaction associated data as third classified data corresponding to the transaction service data type. The data classifying module 13 is further configured to combine the first classified data, the second classified data, and the third classified data into the N types of classified data.

In an implementation, the data classifying module 13 is further configured to obtain a component identification of the first target component. The data classifying module 13 is further configured to obtain, in the first classified data, virtual asset associated data with the component identification of the first target component as first component data. The data classifying module 13 is further configured to obtain, in the second classified data, virtual asset associated data with the component identification of the first target component as second component data. The data classifying module 13 is further configured to obtain, in the third classified data, virtual asset associated data with the component identification of the first target component as third component data. The data classifying module 13 is further configured to combine the first component data, the second component data, and the third component data into the component asset data of the first target component.

In an implementation, the block includes a first block, a second block, and a third block. The block adding module 14 is further configured to generate the first block according to the component identification of the first target component and the first component data. The block adding module 14 is further configured to generate the second block according to the component identification of the first target component and the second component data. The block adding module 14 is further configured to generate the third block according to the component identification of the first target component and the third component data. The block adding module 14 is further configured to add the first block, the second block, and the third block respectively into the block chain.

In an implementation, the block chain-based data processing apparatus 1 further includes a device data obtaining module 15 and a data update module 16. The device data obtaining module 15 is configured to obtain device associated data transmitted by a second device when a heartbeat cycle is reached, where the device associated data is use data of the second device after a second target component is installed, and the at least two components include the second target component. The data update module 16 is configured to traverse the device associated data. The data update module 16 is further configured to obtain a target service type corresponding to component associated data of the second target component, when the device associated data includes the component associated data of the second target component. The data update module 16 is further configured to obtain a component identification of the second target component and obtain a first associated block in the block chain, where the first associated block includes the component identification of the second target component and belongs to the target service type. The data update module 16 is further configured to generate a target block according to the first associated block and the component associated data, and add the target block into the block chain.

As for the specific implementation methods of the device data obtaining module 15 and the data update module 16, reference can be made to the operations at S 104 in the implementation corresponding to FIG. 3, which will not be repeated herein.

In an implementation, the target service type includes the asset service data type. The data update module 16 is further configured to obtain a component previous use record, a component previous maintenance record, and a component previous depreciation record of the second target component stored in the first associated block. The data update module 16 is further configured to obtain, in the component associated data, a component use record, a component maintenance record, and a component depreciation record belonging to the asset service data type. The data update module 16 is further configured to determine the component previous use record, the component previous maintenance record, the component previous depreciation record, the component use record, the component maintenance record, and the component depreciation record as component asset data of the second target component. The data update module 16 is further configured to generate the target block according to the component identification of the second target component and the component asset data of the second target component.

In an implementation, the block chain-based data processing apparatus 1 further includes a request processing module 17, a data matching module 18, and a data processing module 19. The request processing module 17 is configured to obtain a data update request for a third target component transmitted by a third device, where the at least two components include the third target component, and the data update request includes component update data of the third target component. The request processing module 17 is further configured to obtain a second associated block in the block chain based on the data update request, where the second associated block is used to record the third target component. The data matching module 18 is configured to obtain virtual asset associated data belonging to the third target component stored in the second associated block, and compare the virtual asset associated data belonging to the third target component with the component update data. The data processing module 19 is configured to generate, according to the virtual asset associated data belonging to the third target component and the component update data, a component block used to record the third target component when the component update data does not exist in the virtual asset associated data belonging to the third target component, and add the component block into the block chain. The data processing module 19 is further configured to generate a data duplicate notification when the component update data exists in the virtual asset associated data belonging to the third target component, and transmit the data duplicate notification to the third device.

As for the specific implementation methods of the request processing module 17, the data matching module 18, and the data processing module 19, reference can be made to the operations at S 104 in the implementation corresponding to FIG. 3, which will not be repeated herein.

In an implementation, the block chain-based data processing apparatus 1 further includes a request obtaining module 20, a block obtaining module 21, and a data transmitting module 22. The request obtaining module 20 is configured to obtain a data access request for a fourth target component transmitted by a fourth device, where the at least two components include the fourth target component. The block obtaining module 21 is configured to obtain a third associated block in the block chain based on the data access request, where the third associated block is used to record the fourth target component. The data transmitting module 22 is configured to obtain virtual asset associated data belonging to the fourth target component stored in the third associated block, and transmit the virtual asset associated data belonging to the fourth target component to the fourth device.

As for the specific implementation methods of the request obtaining module 20, the block obtaining module 21, and the data transmitting module 22, reference can be made to the operations at S 104 in the implementation corresponding to FIG. 3, which will not be repeated herein.

In an implementation, the block chain-based data processing apparatus 1 further includes a data evaluating module 23 and a reference value transmitting module 24. The data evaluating module 23 is configured to obtain a real right transfer request for the item transmitted by a fifth device, where the real right transfer request is used to transfer an affiliate authority of the item to a sixth device, the fifth device has a use authority of the item after the affiliate authority is transferred, and the real right transfer request includes an applied virtual asset value. The data evaluating module 23 is further configured to trigger the smart contract based on the real right transfer request and obtain an item associated block associated with the item in the block chain through the smart contract, where the item associated block includes component asset data respectively corresponding to the at least two components. The data evaluating module 23 is further configured to generate a virtual asset evaluation reference value for the item according to the smart contract and the component asset data respectively corresponding to the at least two components, where the virtual asset evaluation reference value is used to evaluate a virtual asset value of the item for reference. The reference value transmitting module 24 is configured to transmit the virtual asset evaluation reference value to the sixth device, for the sixth device to determine a virtual asset value matched with the virtual asset evaluation reference value, and when the virtual asset value is greater than or equal to the applied virtual asset value, transfer virtual asset data corresponding to the applied virtual asset value to a device account corresponding to the fifth device.

As for the specific implementation methods of the data evaluating module 23 and the reference value transmitting module 24, reference can be made to the operations at S 104 in the implementation corresponding to FIG. 3, which will not be repeated herein.

In an implementation, the block generation rule further includes an integration type. The block chain-based data processing apparatus 1 further includes an identification obtaining module 25 and a block generating module 26. The identification obtaining module 25 is configured to obtain an item identification of the item according to the smart contract and the integration type in the block generation rule. The block generating module 26 is configured to generate, according to the item identification and the virtual asset associated data of the item, an item block used to record the item, and add the item block into the block chain.

As for the specific implementation methods of the identification obtaining module 25 and the block generating module 26, reference can be made to the operations at S 104 in the implementation corresponding to FIG. 3, which will not be repeated herein.

In implementations of the disclosure, when the virtual asset associated data of the item (equivalent to the transaction data obtained at a block chain node) is stored into the block chain, the virtual asset associated data of the item can be classified according to the service types in the block generation rule, to obtain multiple types of classified data. One type of classified data corresponds to one service type. Then virtual asset associated data corresponding to each component (e.g., the first target component) is obtained in each type of classified data. That is, the virtual asset associated data of each component in each service type can be obtained through classification. Component asset data of each component can be determined according to the virtual asset associated data of one component in multiple service types, and the block is generated based on the component asset data and added into the block chain. That is, a block corresponding to each component stores the virtual asset associated data of the component in multiple service types. Therefore, during subsequent reading of data of a target component of the item in a certain designated service type, there is no need to traverse complete virtual asset associated data of the whole item, and only data belonging to the designated service type in the block corresponding to the target component is queried and traversed. As such, time for data query can be consumed, thereby improving the data reading rate. To sum up, in the disclosure, data can be classified and stored in the block chain, thereby improving the data reading rate.

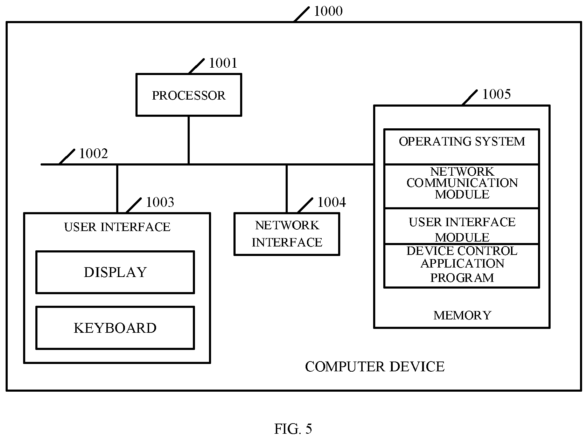

Furthermore, referring to FIG. 5, FIG. 5 is a schematic structural diagram illustrating a computer device provided in implementations of the disclosure. As illustrated in FIG. 5, the apparatus 1 in the implementation corresponding to FIG. 4 can be applied in the computer device 100. The computer device 100 includes a processor 1001, a network interface 1004, and a memory 1005. In addition, the computer device 100 further includes a user interface 1003 and at least one communication interface 1002. The communication interface 1002 is configured for connection and communication between these assemblies. The user interface 1003 may include a display and a keyboard. Alternatively, the user interface 1003 may also include a standard wired interface and a standard wireless interface. Alternatively, the network interface 1004 may include a standard wired interface and a standard wireless interface (such as a wireless fidelity (Wi-Fi) interface). The memory 1005 may be a random access memory (RAM) and also be a non-volatile memory, such as a magnetic disk memory. Alternatively, the memory 1005 may also be at least one storage apparatus located away from the processor 1001. As illustrated in FIG. 5, the memory 1005 serving as a computer-readable storage medium may include an operating system, a network communication module, a user interface module, and a device control application program.

As illustrated in FIG. 5, in the computer device 1000, the network interface 1004 is configured to provide a network communication function, the user interface 1003 is mainly configured to provide an input interface for a user, the processor 1001 is configured to invoke the device control application program stored in the memory 1005, to implement the following. Virtual asset associated data of an item transmitted by a first device is obtained, where the item includes at least two components. A smart contract is triggered based on the virtual asset associated data of the item, and a block generation rule is obtained through the smart contract, where the block generation rule includes a service type of data used for block generation. The virtual asset associated data of the item is classified according to the smart contract and the service type in the block generation rule, to obtain N types of classified data, where each of the N types of classified data corresponds to one service type, and N is a positive integer. For each of the N types of classified data, virtual asset associated data belonging to a first target component is obtained, and component asset data of the first target component is determined according to the virtual asset associated data belonging to the first target component, where the at least two components include the first target component. A block used to record the first target component is generated according to the component asset data of the first target component, and the block is added into a block chain to which the smart contract belongs.

It can be understood that, the computer device 1000 described in implementations of the disclosure can execute description of the block chain-based data processing method in the implementation corresponding to FIG. 3, and also execute description of the block chain-based data processing apparatus in the implementation corresponding to FIG. 4, which will not be repeated herein. In addition, the advantageous effect is described in a same method, which will not be repeated herein.

In addition, it needs to be noted that, a computer-readable storage medium is provided in implementations of the disclosure. The computer-readable storage medium is configured to store the computer programs executed by the computer device 1000 used for data processing described above. The computer programs include program instructions which, when executed by the processor, can execute the block chain-based data processing method in the implementation corresponding to FIG. 3, so which will not be repeated herein. In addition, the advantageous effect is described in a same method, which will not be repeated herein. As for technical details undisclosed in implementations related to the computer-readable storage medium in the disclosure, reference can be made to descriptions in the method implementations of the disclosure.

The computer-readable storage medium may be an internal storage unit of the block chain-based data processing apparatus provided in any of the foregoing implementations or the above computer device, such as a hard disk or a memory of the computer device. The computer-readable storage medium may also be an external storage device of the computer device, such as a plug-in hard disk, a smart media card (SMC), a secure digital (SD) card, a flash card, and the like that are provided on the computer device. In addition, the computer-readable storage medium may also include both the internal storage unit of the computer device and the external storage device of the computer device. The computer-readable storage medium is configured to store computer programs and other programs and data required by the computer device. The computer-readable storage medium can be further configured to temporarily store data that has been or is to be outputted.

A computer program product or computer programs are provided in an aspect of the disclosure. The computer program product or computer programs include computer instructions stored in a computer-readable storage medium. A processor of a computer device is configured to read the computer instructions from the computer-readable storage medium. The computer instructions, when executed by the processor, cause the processor to perform the method provided in an aspect in implementations of the disclosure.

The terms "first", "second", and the like used in the specification, the claims, and the accompany drawings in implementations of the disclosure are used to distinguish different objects rather than describe a particular order. The terms "include" and variations thereof are intended to cover non-exclusive inclusion. For example, a process, method, apparatus, product, or device including a series of steps or units is not limited to the listed steps or modules, on the contrary, it can optionally include other steps or modules that are not listed; alternatively, other steps or units inherent to the process, method, apparatus, product, or device can be included either.

Those of ordinary skill in the art will appreciate that units and algorithmic operations of various examples described in connection with implementations herein can be implemented by electronic hardware, computer software, or by a combination of computer software and electronic hardware. In order to describe interchangeability between hardware and software, the contents and steps of each implementation have been generally described according to functions in the above description. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

The method and related apparatus provided in implementations of the disclosure is described herein with reference to method flowcharts and/or structural diagrams provided in implementations of the disclosure. Specifically, each flow and/or block in the method flowchart and/or structural diagram, and a combination of flow and/or block in the flowchart and/or block diagram can be implemented by computer program instructions. These computer program instructions may be provided to a general purpose computer, a special purpose computer, an embedded processor or a processor of other programmable data processing apparatuses to form a machine, such that devices for implementing functions specified by one or more flows in the flowchart and/or one or more blocks in the structural diagram may be generated by executing the instructions with the processor of the computer or other programmable data processing apparatuses. The computer program instructions may also be stored in a computer-readable memory that can direct the computer or other programmable data processing apparatuses to operate in a given manner, so that the instructions stored in the computer-readable memory produce a manufactured article including an instruction device, and the instruction device implements the functions specified by one or more flows in the flowchart and/or one or more blocks in the structural diagram. The computer program instructions may also be loaded onto the computer or other programmable data processing apparatuses, such that a series of process steps may be executed on the computer or other programmable apparatuses to produce processing implemented by the computer, so that the instructions executed on the computer or other programmable apparatuses provide steps for implementing the functions specified by one or more flows in the flowchart and/or one or more blocks in the structural diagram.

The foregoing implementations are merely some implementations of the disclosure. The protection scope of the disclosure is not limited thereto. Those skilled in the art can easily think of variations or substitutions within the technical scope disclosed in the disclosure, and these variations or substitutions shall be fall in the scope of protection of the disclosure. Therefore, the protection scope of the disclosure shall be subject to the protection scope of the claims.

## Claims

1. A block chain-based data processing method, comprising:
obtaining (S101) virtual asset associated data of an item transmitted by a first device, wherein the item comprises at least two components;
triggering (S 102) a smart contract based on the virtual asset associated data of the item, and obtaining a block generation rule through the smart contract,
**characterized in that**:
the block generation rule comprises a service type of data used for block generation; and
the method further comprises:
classifying (S 103) the virtual asset associated data of the item according to the smart contract and the service type in the block generation rule, to obtain N types of classified data, wherein each of the N types of classified data corresponds to one service type, and N is an integer greater than 1;
for each of the N types of classified data, obtaining (S 104) virtual asset associated data belonging to a first target component, and determining component asset data having N service types of the first target component according to the virtual asset associated data belonging to the first target component, wherein the at least two components comprise the first target component; and
generating (S 105), according to the component asset data having the N service types of the first target component, a block used to record the first target component, storing the component asset data having the N service types of the first target component into the block used to record the first target component, and adding the block into a block chain to which the smart contract belongs.

2. The method of claim 1, wherein
the service type comprises an asset service data type, a basic service data type, and a transaction service data type; and
classifying the virtual asset associated data of the item according to the smart contract and the service type in the block generation rule, to obtain the N types of classified data comprises:
obtaining a data key field corresponding to the asset service data type, wherein the data key field comprises a use record key field, a maintenance record key field, and a depreciation record key field;
obtaining, in the virtual asset associated data of the item, a previous use record corresponding to the use record key field, a previous maintenance record corresponding to the maintenance record key field, and a previous depreciation record corresponding to the depreciation record key field, and determining the previous use record, the previous maintenance record, and the previous depreciation record as first classified data corresponding to the asset service data type;
obtaining a factory key field corresponding to the basic service data type, obtaining factory associated data corresponding to the factory key field in the virtual asset associated data of the item, and determining the factory associated data as second classified data corresponding to the basic service data type;
obtaining a transaction key field corresponding to the transaction service data type, obtaining transaction associated data corresponding to the transaction key field in the virtual asset associated data of the item, and determining the transaction associated data as third classified data corresponding to the transaction service data type; and
combining the first classified data, the second classified data, and the third classified data into the N types of classified data.

3. The method of claim 2, wherein for each of the N types of classified data, obtaining the virtual asset associated data belonging to the first target component, and determining the component asset data having the N service types of the first target component according to the virtual asset associated data belonging to the first target component comprises:
obtaining a component identification of the first target component;
obtaining, in the first classified data, virtual asset associated data with the component identification of the first target component as first component data;
obtaining, in the second classified data, virtual asset associated data with the component identification of the first target component as second component data;
obtaining, in the third classified data, virtual asset associated data with the component identification of the first target component as third component data; and
combining the first component data, the second component data, and the third component data into the component asset data of the first target component.

4. The method of claim 3, wherein
the block comprises a first block, a second block, and a third block; and
generating, according to the component asset data having the N service types of the first target component, the block used to record the first target component, and adding the block into the block chain to which the smart contract belongs comprises:
generating the first block according to the component identification of the first target component and the first component data;
generating the second block according to the component identification of the first target component and the second component data;
generating the third block according to the component identification of the first target component and the third component data; and
adding the first block, the second block, and the third block respectively into the block chain.

5. The method of claim 2, further comprising:
obtaining device associated data transmitted by a second device in a heartbeat cycle, wherein the device associated data is use data of the second device after a second target component is installed, and the at least two components comprise the second target component;
traversing the device associated data;
obtaining a target service type corresponding to component associated data of the second target component, when the device associated data comprises the component associated data of the second target component;
obtaining a component identification of the second target component, and obtaining a first associated block in the block chain, wherein the first associated block comprises the component identification of the second target component and belongs to the target service type; and
generating a target block according to the first associated block and the component associated data, and adding the target block into the block chain.

6. The method of claim 5, wherein
the target service type comprises the asset service data type; and
generating the target block according to the first associated block and the component associated data comprises:
obtaining a component previous use record, a component previous maintenance record, and a component previous depreciation record of the second target component stored in the first associated block;
obtaining, in the component associated data, a component use record, a component maintenance record, and a component depreciation record belonging to the asset service data type;
determining the component previous use record, the component previous maintenance record, the component previous depreciation record, the component use record, the component maintenance record, and the component depreciation record as component asset data of the second target component; and
generating the target block according to the component identification of the second target component and the component asset data of the second target component.

7. The method of claim 1, further comprising:
obtaining a data update request for a third target component transmitted by a third device, wherein the at least two components comprise the third target component, and the data update request comprises component update data of the third target component;
obtaining a second associated block in the block chain based on the data update request, wherein the second associated block is used to record the third target component;
obtaining virtual asset associated data belonging to the third target component stored in the second associated block, and comparing the virtual asset associated data belonging to the third target component with the component update data;
generating, according to the virtual asset associated data belonging to the third target component and the component update data, a component block used to record the third target component when the component update data does not exist in the virtual asset associated data belonging to the third target component, and adding the component block into the block chain; and
generating a data duplicate notification when the component update data exists in the virtual asset associated data belonging to the third target component, and transmitting the data duplicate notification to the third device.

8. The method of claim 1, further comprising:
obtaining a data access request for a fourth target component transmitted by a fourth device, wherein the at least two components comprise the fourth target component;
obtaining a third associated block in the block chain based on the data access request, wherein the third associated block is used to record the fourth target component; and
obtaining virtual asset associated data belonging to the fourth target component stored in the third associated block, and transmitting the virtual asset associated data belonging to the fourth target component to the fourth device.

9. The method of claim 1, further comprising:
obtaining a real right transfer request for the item transmitted by a fifth device, wherein the real right transfer request is used to transfer an affiliate authority of the item to a sixth device, the fifth device has a use authority of the item after the affiliate authority is transferred, and the real right transfer request comprises an applied virtual asset value;
triggering the smart contract based on the real right transfer request, and obtaining an item associated block associated with the item in the block chain through the smart contract, wherein the item associated block comprises component asset data respectively corresponding to the at least two components;
generating a virtual asset evaluation reference value for the item according to the smart contract and the component asset data respectively corresponding to the at least two components, wherein the virtual asset evaluation reference value is used to evaluate a virtual asset value of the item for reference; and
transmitting the virtual asset evaluation reference value to the sixth device, for the sixth device to determine a virtual asset value matched with the virtual asset evaluation reference value, and when the virtual asset value is greater than or equal to the applied virtual asset value, transferring virtual asset data corresponding to the applied virtual asset value to a device account corresponding to the fifth device.

10. The method of claim 1, wherein
the block generation rule further comprises an integration type; and
the method further comprises:
obtaining an item identification of the item according to the smart contract and the integration type in the block generation rule; and
generating, according to the item identification and the virtual asset associated data of the item, an item block used to record the item, and adding the item block into the block chain.

11. A block chain-based data processing apparatus, comprising:
a data obtaining module (11), configured to obtain virtual asset associated data of an item transmitted by a first device, wherein the item comprises at least two components;
a contract invoking module (12), configured to trigger a smart contract based on the virtual asset associated data of the item and obtain a block generation rule through the smart contract,
**characterized in that**:
the block generation rule comprises a service type of data used for block generation; and
the apparatus further comprises:
a data classifying module (13), configured to classify the virtual asset associated data of the item according to the smart contract and the service type in the block generation rule to obtain N types of classified data, wherein each of the N types of classified data corresponds to one service type, and N is an integer greater than 1;
the data classifying module (13) being further configured to, for each of the N types of classified data, obtain virtual asset associated data belonging to a first target component, and determine component asset data having N service types of the first target component according to the virtual asset associated data belonging to the first target component, wherein the at least two components comprise the first target component; and
a block adding module (14), configured to generate, according to the component asset data having the N service types of the first target component, a block used to record the first target component, store the component asset data having the N service types of the first target component into the block used to record the first target component, and add the block into a block chain to which the smart contract belongs.

12. A computer device (1000), comprising:
a memory (1005) configured to store program codes;
a network interface (1004) configured to provide a network communication function; and
a processor (1001) coupled with the memory and the network interface and configured to invoke the program codes to perform the method of any of claims 1-10.

13. A computer-readable storage medium, configured to store computer programs, which when executed, are operable with a processor to perform the method of any of claims 1-10.

## Patentansprüche

1. Ein Blockchain-basiertes Datenverarbeitungsverfahren, umfassend:
Erhalten (S101) von virtuellem Vermögen assoziierten Daten eines Gegenstands, der von einem ersten Gerät übertragen wird, wobei der Gegenstand mindestens zwei Komponenten umfasst;
Auslösen (S102) eines intelligenten Vertrags basierend auf den mit dem virtuellen Vermögen assoziierten Daten des Gegenstands, und Erhalten einer Blockerzeugungsregel durch den intelligenten Vertrag,
**dadurch gekennzeichnet, dass**:
Die Blockerzeugungsregel einen Diensttyp von Daten umfasst, der für die Blockerzeugung verwendet wird; und
das Verfahren umfasst ferner:
Klassifizieren (S103) der mit dem virtuellen Vermögen assoziierten Daten des Gegenstands gemäß dem intelligenten Vertrag und dem Diensttyp in der Blockerzeugungsregel, um N Typen von klassifizierten Daten zu erhalten, wobei jeder der N Typen von klassifizierten Daten einem Diensttyp entspricht und N eine ganze Zahl größer als 1 ist;
für jede der N Typen von klassifizierten Daten, Erhalten (S104) von virtuellem Vermögen assoziierten Daten, die zu einer ersten Zielkomponente gehören, und Bestimmen von Komponentenvermögens-Daten mit N Diensttypen der ersten Zielkomponente, wobei die mindestens zwei Komponenten die erste Zielkomponente umfassen; und
Erzeugen (S105) eines Blocks, der zum Aufzeichnen der ersten Zielkomponente verwendet wird, entsprechend den Komponentenvermögens-Daten, die die N Diensttypen der ersten Zielkomponente aufweisen, Speichern der Komponentenvermögens-Daten, die die N Diensttypen der ersten Zielkomponente aufweisen, in dem Block, der zum Aufzeichnen der ersten Zielkomponente verwendet wird, und Hinzufügen des Blocks zu einer Blockchain, zu der der intelligente Vertrag gehört.

2. Verfahren nach Anspruch 1, wobei
der Diensttyp umfasst einen Vermögensdienst-Datentyp, einen Basisdienst-Datentyp und einen Transaktionsdienst-Datentyp; und
Klassifizieren der mit dem virtuellen Vermögen assoziierten Daten des Gegenstands gemäß dem intelligenten Vertrag und dem Diensttyp in der Blockerzeugungsregel, um die N Typen von klassifizierten Daten zu erhalten, umfassend:
Erhalten eines Daten-Schlüsselfeldes, das dem Vermögensdienst-Datentyp entspricht, wobei das Daten-Schlüsselfeld ein Nutzungsaufzeichnungs-Schlüsselfeld, ein Wartungsaufzeichnungs-Schlüsselfeld und ein Abschreibungsaufzeichnungs-Schlüsselfeld umfasst;
Erhalten, in den mit virtuellem Vermögen assoziierten Daten des Gegenstands, einer vorherigen Nutzungsaufzeichnung, die dem Nutzungsaufzeichnungs-Schlüsselfeld entspricht, einer vorherigen Wartungsaufzeichnung, die dem Wartungsaufzeichnungs-Schlüsselfeld entspricht, und einer vorherigen Abschreibungsaufzeichnung, die dem Abschreibungsaufzeichnungs-Schlüsselfeld entspricht, und Bestimmen der vorherigen Nutzungsaufzeichnung, der vorherigen Wartungsaufzeichnung und der vorherigen Abschreibungsaufzeichnung als erste klassifizierte Daten, die dem Vermögensdienst-Datentyp entsprechen;
Erhalten eines Fabrik-Schlüsselfeldes, das dem Basisdienst-Datentyp entspricht, Erhalten von Fabrik-assoziierten Daten, die dem Fabrik-Schlüsselfeld in den virtuellem Vermögen assoziierten Daten des Gegenstands entsprechen, und Bestimmen der Fabrik-assoziierten Daten als zweite klassifizierte Daten, die dem Basisdienst-Datentyp entsprechen;
Erhalten eines Transaktions-Schlüsselfeldes, das dem Transaktionsdienst-Datentyp entspricht, Erhalten von Transaktion-assoziierten Daten, die dem Transaktions-Schlüsselfeld in den virtuellem Vermögen assoziierten Daten des Gegenstands entsprechen, und Bestimmen der Transaktion-assoziierten Daten als dritte klassifizierte Daten, die dem Transaktionsdienst-Datentyp entsprechen; und
Kombinieren der ersten klassifizierten Daten, der zweiten klassifizierten Daten und der dritten klassifizierten Daten zu den N Typen von klassifizierten Daten.

3. Verfahren nach Anspruch 2, wobei für jede der N Typen von klassifizierten Daten das Erhalten der virtuellem Vermögen assoziierten Daten, die zu der ersten Zielkomponente gehören, und das Bestimmen der Komponentenvermögens-Daten mit den N Diensttypen der ersten Zielkomponente gemäß den virtuellem Vermögen assoziierten Daten, die zu der ersten Zielkomponente gehören, umfasst:
Erhalten einer Komponentenidentifikation der ersten Zielkomponente;
Erhalten, in den ersten klassifizierten Daten, von virtuellem Vermögen assoziierten Daten mit der Komponentenidentifikation der ersten Zielkomponente als erste Komponentendaten;
Erhalten, in den zweiten klassifizierten Daten, von virtuellem Vermögen assoziierten Daten mit der Komponentenidentifikation der ersten Zielkomponente als zweite Komponentendaten;
Erhalten, in den dritten klassifizierten Daten, von virtuellem Vermögen assoziierten Daten mit der Komponentenidentifikation der ersten Zielkomponente als dritte Komponentendaten; und
Kombinieren der ersten Komponentendaten, der zweiten Komponentendaten und der dritten Komponentendaten zu den Komponentenvermögens-Daten der ersten Zielkomponente.

4. Verfahren nach Anspruch 3, wobei
der Block einen ersten Block, einen zweiten Block und einen dritten Block umfasst; und
Erzeugen, gemäß den Komponentenvermögens-Daten mit den N Diensttypen der ersten Zielkomponente, des Blocks, der zum Aufzeichnen der ersten Zielkomponente verwendet wird, und Hinzufügen des Blocks in die Blockchain, zu der der intelligente Vertrag gehört, umfassend:
Erzeugen des ersten Blocks entsprechend der Komponentenidentifikation der ersten Zielkomponente und den ersten Komponentendaten;
Erzeugen des zweiten Blocks entsprechend der Komponentenidentifikation der ersten Zielkomponente und der zweiten Komponentendaten;
Erzeugen des dritten Blocks entsprechend der Komponentenidentifikation der ersten Zielkomponente und der dritten Komponentendaten; und
Hinzufügen des ersten Blocks, des zweiten Blocks bzw. des dritten Blocks in die Blockchain.

5. Verfahren nach Anspruch 2, ferner umfassend:
Erhalten von Geräte-assoziierten Daten, die von einem zweiten Gerät in einem Herzzyklus übertragen werden, wobei die Geräte-assoziierten Daten Nutzungsdaten des zweiten Geräts sind, nachdem eine zweite Zielkomponente installiert wurde, und die mindestens zwei Komponenten die zweite Zielkomponente umfassen;
Durchsuchen der Geräte-assoziierten Daten;
Erhalten eines Zieldiensttyps, der den Komponenten assoziierten Daten der zweiten Zielkomponente entspricht, wenn die Geräte-assoziierten Daten die den Komponenten-assoziierten Daten der zweiten Zielkomponente umfassen;
Erhalten einer Komponentenidentifikation der zweiten Zielkomponente und Erhalten eines ersten assoziierten Blocks in der Blockchain, wobei der erste assoziierte Block die Komponentenidentifikation der zweiten Zielkomponente umfasst und zu dem Zieldiensttyp gehört; und
Erzeugen eines Zielblocks entsprechend dem ersten assoziierten Block und den Komponenten-assoziierten Daten, und Hinzufügen des Zielblocks in die Blockchain.

6. Verfahren nach Anspruch 5, wobei
der Zieldiensttyp den Vermögensdienst-Datentyp umfasst; und
Erzeugen des Zielblocks entsprechend dem ersten assoziierten Block und den Komponenten-assoziierten Daten umfasst:
Erhalten einer vorherigen Nutzungsaufzeichnung der Komponente, einer vorherigen Wartungsaufzeichnung der Komponente und einer vorherigen Abschreibungsaufzeichnung der zweiten Zielkomponente, die in dem ersten zugehörigen Block gespeichert sind;
Erhalten, in den Komponenten-assoziierten Daten, einer Komponenten-Nutzungsaufzeichnung, einer Komponenten-Wartungsaufzeichnung und einer Komponenten-Abschreibungsaufzeichnung, die zu dem Vermögensdienst-Datentyp gehören;
Bestimmen der vorherigen Nutzungsaufzeichnung der Komponente, der vorherigen Wartungsaufzeichnung der Komponente, der vorherigen Abschreibungsaufzeichnung der Komponente, der Nutzungsaufzeichnung der Komponente, der Wartungsaufzeichnung der Komponente und der Abschreibungsaufzeichnung der Komponente als Komponentenvermögens-Daten der zweiten Zielkomponente; und Erzeugen des Zielblocks gemäß der Komponentenidentifikation der zweiten Zielkomponente und den Komponentenvermögens-Daten der zweiten Zielkomponente.

7. Verfahren nach Anspruch 1, ferner umfassend:
Erhalten einer Datenaktualisierungsanforderung für eine dritte Zielkomponente, die von einem dritten Gerät übertragen wird, wobei die mindestens zwei Komponenten die dritte Zielkomponente umfassen und die Datenaktualisierungsanforderung Komponentenaktualisierungsdaten der dritten Zielkomponente umfasst;
Erhalten eines zweiten zugehörigen Blocks in der Blockchain auf der Grundlage der Datenaktualisierungsanforderung, wobei der zweite zugehörige Block verwendet wird, um die dritte Zielkomponente aufzuzeichnen;
Erhalten von virtuellem Vermögen assoziierten Daten, die zu der dritten Zielkomponente gehören, die in dem zweiten assoziierten Block gespeichert ist, und Vergleichen der virtuellem Vermögen assoziierten Daten, die zu der dritten Zielkomponente gehören, mit den Komponentenaktualisierungsdaten;
Erzeugen, gemäß den virtuellem Vermögen assoziierten Daten, die zu der dritten Zielkomponente gehören, und den Komponentenaktualisierungsdaten, eines Komponentenblocks, der verwendet wird, um die dritte Zielkomponente aufzuzeichnen, wenn die Komponentenaktualisierungsdaten nicht in den virtuellem Vermögen assoziierten Daten existieren, die zu der dritten Zielkomponente gehören, und Hinzufügen des Komponentenblocks in die Blockchain; und
Erzeugen einer Datenduplikat-Benachrichtigung, wenn die Komponentenaktualisierungsdaten in den virtuellem Vermögen assoziierten Daten existieren, die zu der dritten Komponente gehören, und Übertragen der Datenduplikat-Benachrichtigung an das dritte Gerät.

8. Verfahren nach Anspruch 1, ferner umfassend:
Erhalten einer Datenzugriffsanfrage für eine vierte Zielkomponente, die von einem vierten Gerät übertragen wird, wobei die mindestens zwei Komponenten die vierte Zielkomponente umfassen;
Erhalten eines dritten zugehörigen Blocks in der Blockchain basierend auf der Datenzugangsanfrage, wobei der dritte zugehörige Block verwendet wird, um die vierte Zielkomponente aufzuzeichnen; und
Erhalten von virtuellem Vermögen assoziierten Daten, die zu der vierten Zielkomponente gehören, die in dem dritten assoziierten Block gespeichert ist, und Übertragen der virtuellem Vermögen assoziierten Daten, die zu der vierten Zielkomponente gehören, an das vierte Gerät.

9. Verfahren nach Anspruch 1, ferner umfassend:
Erhalten einer Übertragungsanfrage von realen Rechten für den Gegenstand, die von einem fünften Gerät übertragen wird, wobei die Übertragungsanfrage von realen Rechten verwendet wird, um eine Partnerautorität des Gegenstands auf ein sechstes Gerät zu übertragen, das fünfte Gerät eine Nutzungsautorität für den Gegenstand hat, nachdem die Partnerautorität übertragen wurde, und die Übertragungsanfrage von realen Rechten einen angewandten virtuellen Vermögenswert umfasst;
Auslösen des intelligenten Vertrags basierend auf der Übertragungsanfrage für reale Rechte und Erhalten eines dem Gegenstand assoziierten Blocks, der mit dem Gegenstand in der Blockkette durch den intelligenten Vertrag assoziiert ist, wobei der dem Gegenstand assoziierte Block Komponentenvermögens-Daten umfasst, die jeweils den mindestens zwei Komponenten entsprechen;
Erzeugen eines virtuellen Vermögens-Bewertungsreferenzwerts für den Gegenstand gemäß dem intelligenten Vertrag und den Komponentenvermögens-Daten, die jeweils den mindestens zwei Komponenten entsprechen, wobei der virtuelle Vermögens-Bewertungsreferenzwert verwendet wird, um einen virtuellen Vermögenswert des Gegenstands als Referenz zu bewerten; und
Übertragen des virtuellen Vermögens-Bewertungsreferenzwert an das sechste Gerät, um das sechste Gerät zu veranlassen, einen virtuellen Vermögenswert zu bestimmen, der mit dem virtuellen Vermögens-Bewertungsreferenzwert übereinstimmt, und wenn der virtuelle Vermögenswert größer oder gleich dem angewendeten virtuellen Vermögenswert ist, Übertragen von virtuellen Vermögensdaten, die dem angewendeten virtuellen Vermögenswert entsprechen, an ein Gerätekonto, das dem fünften Gerät entspricht.

10. Verfahren nach Anspruch 1, wobei
die Blockerzeugungsregel ferner einen Integrationstyp umfasst und
das Verfahren ferner umfasst:
Erhalten einer Gegenstandsidentifikation des Gegenstands gemäß dem intelligenten Vertrag und dem Integrationstyp in der Blockerzeugungsregel; und
Erzeugen, gemäß der Identifikation des Gegenstands und den mit virtuellem Vermögen assoziierten Daten des Gegenstands, eines Gegenstandsblocks, der verwendet wird, um den Gegenstand aufzuzeichnen und den Gegenstandsblock in die Blockchain aufzunehmen.

11. Eine auf einer Blockchain basierende Datenverarbeitungsvorrichtung, umfassend:
Ein Datenerfassungsmodul (11), das so konfiguriert ist, dass es virtuellem Vermögen assoziierte Daten eines von einem ersten Gerät übertragenen Gegenstands erhält, wobei der Gegenstand mindestens zwei Komponenten umfasst;
ein Vertragsaufrufmodul (12), das so konfiguriert ist, dass es einen intelligenten Vertrag basierend auf den mit virtuellem Vermögen assoziierten Daten des Gegenstands auslöst und eine Blockerzeugungsregel durch den intelligenten Vertrag erhält,
**dadurch gekennzeichnet, dass**:
Die Blockerzeugungsregel einen Diensttyp von Daten umfasst, die für die Blockerzeugung verwendet werden; und
die Vorrichtung ferner umfasst:
Ein Datenklassifizierungsmodul (13), das so konfiguriert ist, dass es die mit dem virtuellen Vermögen assoziierten Daten des Gegenstands gemäß dem intelligenten Vertrag und dem Diensttyp in der Blockerzeugungsregel klassifiziert, um N Typen von klassifizierten Daten zu erhalten, wobei jeder der N Typen von klassifizierten Daten einem Diensttyp entspricht und N eine ganze Zahl größer als 1 ist;
das Datenklassifizierungsmodul (13) ferner so konfiguriert ist, dass es für jeden der N Typen klassifizierter Daten virtuellem Vermögen assoziierte Daten erhält, die zu einer ersten Zielkomponente gehören, und Komponentenvermögensdaten mit N Diensttypen der ersten Zielkomponente gemäß den virtuellem Vermögen assoziierten Daten bestimmt, die zu der ersten Zielkomponente gehören, wobei die mindestens zwei Komponenten die erste Zielkomponente umfassen; und
ein Blockzusatzmodul (14), das so konfiguriert ist, dass es gemäß den Vermögensdaten der Komponente, die die N Diensttypen der ersten Zielkomponente aufweisen, einen Block erzeugt, der zum Aufzeichnen der ersten Zielkomponente verwendet wird, die Vermögensdaten der Komponente, die die N Diensttypen der ersten Zielkomponente aufweisen, in dem Block speichert, der zum Aufzeichnen der ersten Zielkomponente verwendet wird, und den Block zu einer Blockchain hinzufügt, zu der der intelligente Vertrag gehört.

12. Ein Computergerät (1000), umfassend:
Einen Speicher (1005), der zum Speichern von Programmcodes konfiguriert ist;
eine Netzwerkschnittstelle (1004), die so konfiguriert ist, dass sie eine Funktion zur Netzwerkkommunikation bereitstellt; und
einen Prozessor (1001), der mit dem Speicher und der Netzwerkschnittstelle gekoppelt und so konfiguriert ist, dass er die Programmcodes aufruft, um das Verfahren nach einem der Ansprüche 1-10 durchzuführen.

13. Computerlesbares Speichermedium, das so konfiguriert ist, dass es Computerprogramme speichert, die, sofern sie ausgeführt werden, mit einem Prozessor betreibbar sind, um das Verfahren nach einem der Ansprüche 1-10 durchzuführen.

## Revendications

1. Procédé de traitement de données basé sur une chaîne de blocs, comprenant :
l'obtention (S101) de données associées à un actif virtuel d'un article transmises par un premier dispositif, l'article comprenant au moins deux composants ;
le déclenchement (S102) d'un contrat intelligent sur la base des données associées à un actif virtuel de l'article, et l'obtention d'une règle de génération de bloc par l'intermédiaire du contrat intelligent,
**caractérisé en ce que** :
la règle de génération de bloc comprend un type de service de données utilisé pour une génération de bloc ; et le procédé comprend en outre :
la classification (S103) des données associées à un actif virtuel de l'article selon le contrat intelligent et le type de service dans la règle de génération de bloc, pour obtenir N types de données classifiées, dans lequel chacun des N types de données classifiées correspond à un type de service, et N est un nombre entier supérieur à 1 ;
pour chacun des N types de données classifiées, l'obtention (S104) de données associées à un actif virtuel appartenant à un premier composant cible, et la détermination de données d'actif de composant ayant N types de service du premier composant cible selon les données associées à un actif virtuel appartenant au premier composant cible, dans lequel les au moins deux composants comprennent le premier composant cible ; et
la génération (S105), selon les données d'actif de composant ayant les N types de service du premier composant cible, d'un bloc utilisé pour enregistrer le premier composant cible, le stockage des données d'actif de composant ayant les N types de service du premier composant cible dans le bloc utilisé pour enregistrer le premier composant cible, et l'ajout du bloc dans une chaîne de blocs à laquelle appartient le contrat intelligent.

2. Procédé selon la revendication 1, dans lequel
le type de service comprend un type de données de service d'actif, un type de données de service de base, et un type de données de service de transaction ; et
la classification des données associées à un actif virtuel de l'article selon le contrat intelligent et le type de service dans la règle de génération de bloc, pour obtenir les N types de données classifiées, comprend :
l'obtention d'un champ clé de données correspondant au type de données de service d'actif, le champ clé de données comprenant un champ clé d'enregistrement d'utilisation, un champ clé d'enregistrement de maintenance, et un champ clé d'enregistrement d'amortissement ;
l'obtention, dans les données associées à un actif virtuel de l'article, d'un enregistrement d'utilisation précédente correspondant au champ clé d'enregistrement d'utilisation, d'un enregistrement de maintenance précédente correspondant au champ clé d'enregistrement de maintenance, et d'un enregistrement d'amortissement précédent correspondant au champ clé d'enregistrement d'amortissement, et la détermination de l'enregistrement d'utilisation précédente, de l'enregistrement de maintenance précédente, et de l'enregistrement d'amortissement précédent en tant que premières données classifiées correspondant au type de données de service d'actif ;
l'obtention d'un champ clé d'usine correspondant au type de données de service de base, l'obtention de données associées à une usine correspondant au champ clé d'usine dans les données associées à un actif virtuel de l'article, et la détermination des données associées à une usine en tant que deuxièmes données classifiées correspondant au type de données de service de base ;
l'obtention d'un champ de clé de transaction correspondant au type de données de service de transaction, l'obtention de données associées à une transaction correspondant au champ de clé de transaction dans les données associées à un actif virtuel de l'article, et la détermination des données associées à une transaction en tant que troisièmes données classifiées correspondant au type de données de service de transaction ; et
la combinaison des premières données classifiées, des deuxièmes données classifiées, et des troisièmes données classifiées en les N types de données classifiées.

3. Procédé selon la revendication 2, dans lequel, pour chacun des N types de données classifiées, l'obtention des données associées à un actif virtuel appartenant au premier composant cible, et la détermination des données d'actif de composant ayant les N types de service du premier composant cible selon les données associées à un actif virtuel appartenant au premier composant cible, comprennent :
l'obtention d'une identification de composant du premier composant cible ;
l'obtention, dans les premières données classifiées, de données associées à un actif virtuel avec l'identification de composant du premier composant cible en tant que premières données de composant ;
l'obtention, dans les deuxièmes données classifiées, de données associées à un actif virtuel avec l'identification de composant du premier composant cible en tant que deuxièmes données de composant ;
l'obtention, dans les troisièmes données classifiées, de données associées à un actif virtuel avec l'identification de composant du premier composant cible en tant que troisièmes données de composant ; et
la combinaison des premières données de composant, des deuxièmes données de composant, et des troisièmes données de composant en les données d'actif de composant du premier composant cible.

4. Procédé selon la revendication 3, dans lequel
le bloc comprend un premier bloc, un deuxième bloc, et un troisième bloc ; et
la génération, selon les données d'actif de composant ayant les N types de service du premier composant cible, du bloc utilisé pour enregistrer le premier composant cible, et l'ajout du bloc dans la chaîne de blocs à laquelle appartient le contrat intelligent, comprennent :
la génération du premier bloc selon l'identification de composant du premier composant cible et les premières données de composant ;
la génération du deuxième bloc selon l'identification de composant du premier composant cible et les deuxièmes données de composant ;
la génération du troisième bloc selon l'identification de composant du premier composant cible et les troisièmes données de composant ; et
l'ajout du premier bloc, du deuxième bloc, et du troisième bloc respectivement dans la chaîne de blocs.

5. Procédé selon la revendication 2, comprenant en outre :
l'obtention de données associées à un dispositif transmises par un deuxième dispositif dans un cycle de pulsation, dans lequel les données associées à un dispositif sont des données d'utilisation du deuxième dispositif après l'installation d'un deuxième composant cible, et les au moins deux composants comprennent le deuxième composant cible ;
la traversée des données associées à un dispositif ;
l'obtention d'un type de service cible correspondant à des données associées à un composant du deuxième composant cible, lorsque les données associées à un dispositif comprennent les données associées à un composant du deuxième composant cible ;
l'obtention d'une identification de composant du deuxième composant cible, et l'obtention d'un premier bloc associé dans la chaîne de blocs, le premier bloc associé comprenant l'identification de composant du deuxième composant cible et appartenant au type de service cible ; et
la génération d'un bloc cible selon le premier bloc associé et les données associées à un composant, et l'ajout du bloc cible dans la chaîne de blocs.

6. Procédé selon la revendication 5, dans lequel
le type de service cible comprend le type de données de service d'actif ; et
la génération du bloc cible selon le premier bloc associé et les données associées à un composant comprend :
l'obtention d'un enregistrement d'utilisation précédente de composant, d'un enregistrement de maintenance précédente de composant, et d'un enregistrement d'amortissement précédent de composant du deuxième composant cible stocké dans le premier bloc associé ;
l'obtention, dans les données associées à un composant, d'un enregistrement d'utilisation de composant, d'un enregistrement de maintenance de composant, et d'un enregistrement d'amortissement de composant appartenant au type de données de service d'actif ;
la détermination de l'enregistrement d'utilisation précédente de composant, de l'enregistrement de maintenance précédente de composant, de l'enregistrement d'amortissement précédent de composant, de l'enregistrement d'utilisation de composant, de l'enregistrement de maintenance de composant, et l'enregistrement d'amortissement de composant en tant que données d'actif de composant du deuxième composant cible ; et
la génération du bloc cible selon l'identification de composant du deuxième composant cible et les données d'actif de composant du deuxième composant cible.

7. Procédé selon la revendication 1, comprenant en outre :
l'obtention d'une demande de mise à jour de données pour un troisième composant cible transmise par un troisième dispositif, dans lequel les au moins deux composants comprennent le troisième composant cible, et la demande de mise à jour de données comprend des données de mise à jour de composant du troisième composant cible ;
l'obtention d'un deuxième bloc associé dans la chaîne de blocs sur la base de la demande de mise à jour de données, le deuxième bloc associé étant utilisé pour enregistrer le troisième composant cible ;
l'obtention de données associées à un actif virtuel appartenant au troisième composant cible stocké dans le deuxième bloc associé, et la comparaison des données associées à un actif virtuel appartenant au troisième composant cible avec les données de mise à jour de composant ;
la génération, selon les données associées à un actif virtuel appartenant au troisième composant cible et les données de mise à jour de composant, d'un bloc de composant utilisé pour enregistrer le troisième composant cible lorsque les données de mise à jour de composant n'existent pas dans les données associées à un actif virtuel appartenant au troisième composant cible, et l'ajout du bloc de composant dans la chaîne de blocs ; et
la génération d'une notification de doublon de données lorsque les données de mise à jour de composant existent dans les données associées à un actif virtuel appartenant au troisième composant cible, et la transmission de la notification de doublon de données au troisième dispositif.

8. Procédé selon la revendication 1, comprenant en outre :
l'obtention d'une demande d'accès aux données pour un quatrième composant cible transmise par un quatrième dispositif, les au moins deux composants comprenant le quatrième composant cible ;
l'obtention d'un troisième bloc associé dans la chaîne de blocs sur la base de la demande d'accès aux données, le troisième bloc associé étant utilisé pour enregistrer le quatrième composant cible ; et
l'obtention de données associées à un actif virtuel appartenant au quatrième composant cible stocké dans le troisième bloc associé, et la transmission des données associées à un actif virtuel appartenant au quatrième composant cible au quatrième dispositif.

9. Procédé selon la revendication 1, comprenant en outre :
l'obtention d'une demande de transfert de droit réel pour l'article transmise par un cinquième dispositif, dans lequel la demande de transfert de droit réel est utilisée pour transférer une autorisation d'affiliation de l'article à un sixième dispositif, le cinquième dispositif a une autorisation d'utilisation de l'article après le transfert de l'autorisation d'affiliation, et la demande de transfert de droit réel comprend une valeur d'actif virtuel appliquée ;
le déclenchement du contrat intelligent sur la base de la demande de transfert de droit réel, et l'obtention d'un bloc associé à l'article associé à l'article dans la chaîne de blocs par l'intermédiaire du contrat intelligent, le bloc associé à l'article comprenant des données d'actif de composant correspondant respectivement aux au moins deux composants ;
la génération d'une valeur de référence d'évaluation d'actif virtuel pour l'article selon le contrat intelligent et les données d'actif de composant correspondant respectivement aux au moins deux composants, la valeur de référence d'évaluation d'actif virtuel étant utilisée pour évaluer une valeur d'actif virtuel de l'article à titre de référence ; et
la transmission de la valeur de référence d'évaluation d'actif virtuel au sixième dispositif, pour que le sixième dispositif détermine une valeur d'actif virtuel coïncidant avec la valeur de référence d'évaluation d'actif virtuel, et lorsque la valeur d'actif virtuel est supérieure ou égale à la valeur d'actif virtuel appliquée, le transfert de données d'actif virtuel correspondant à la valeur d'actif virtuel appliquée à un compte de dispositif correspondant au cinquième dispositif.

10. Procédé selon la revendication 1, dans lequel
la règle de génération de bloc comprend en outre un type d'intégration ; et
le procédé comprend en outre :
l'obtention d'une identification d'article de l'article selon le contrat intelligent et le type d'intégration dans la règle de génération de bloc ; et
la génération, selon l'identification d'article et les données associées à un actif virtuel de l'article, d'un bloc d'article utilisé pour enregistrer l'article, et l'ajout du bloc d'article dans la chaîne de blocs.

11. Appareil de traitement de données basé sur une chaîne de blocs, comprenant :
un module d'obtention de données (11), configuré pour obtenir des données associées à un actif virtuel d'un article transmises par un premier dispositif, l'article comprenant au moins deux composants ;
un module d'invocation de contrat (12), configuré pour déclencher un contrat intelligent sur la base des données associées à un actif virtuel de l'article et obtenir une règle de génération de bloc par l'intermédiaire du contrat intelligent,
**caractérisé en ce que** :
la règle de génération de bloc comprend un type de service de données utilisé pour une génération de bloc ; et l'appareil comprend en outre :
un module de classification de données (13), configuré pour classer les données associées à un actif virtuel de l'article selon le contrat intelligent et le type de service dans la règle de génération de bloc pour obtenir N types de données classifiées, dans lequel chacun des N types de données classifiées correspond à un type de service, et N est un nombre entier supérieur à 1 ;
le module de classification de données (13) étant en outre configuré pour, pour chacun des N types de données classifiées, obtenir des données associées à un actif virtuel appartenant à un premier composant cible, et déterminer des données d'actif de composant ayant N types de service du premier composant cible selon les données associées à un actif virtuel appartenant au premier composant cible, dans lequel les au moins deux composants comprennent le premier composant cible ; et
un module d'ajout de bloc (14), configuré pour générer, selon les données d'actif de composant ayant les N types de service du premier composant cible, un bloc utilisé pour enregistrer le premier composant cible, stocker les données d'actif de composant ayant les N types de service du premier composant cible dans le bloc utilisé pour enregistrer le premier composant cible, et ajouter le bloc dans une chaîne de blocs à laquelle appartient le contrat intelligent.

12. Dispositif informatique (1000), comprenant :
une mémoire (1005) configurée pour stocker des codes de programme ;
une interface réseau (1004) configurée pour fournir une fonction de communication réseau ; et
un processeur (1001) couplé à la mémoire et à l'interface réseau et configuré pour invoquer les codes de programme pour effectuer le procédé selon l'une quelconque des revendications 1 à 10.

13. Support de stockage lisible par ordinateur, configuré pour stocker des programmes informatiques, qui, lorsqu'ils sont exécutés, sont opérationnels avec un processeur pour effectuer le procédé selon l'une quelconque des revendications 1 à 10.
